(19) **Europäisches Patentamt**
**European Patent Office**
**Office européen des brevets**

(11) **EP 3 043 560 A1**

(12) **EUROPEAN PATENT APPLICATION**
published in accordance with Art. 153(4) EPC

(43) Date of publication:
**13.07.2016 Bulletin 2016/28**

(51) Int Cl.:
***H04N 19/46*** *(2014.01)*    ***H04N 19/40*** *(2014.01)*

(21) Application number: **14842955.8**

(22) Date of filing: **05.09.2014**

(86) International application number:
**PCT/JP2014/073532**

(87) International publication number:
**WO 2015/034061 (12.03.2015 Gazette 2015/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2013   JP 2013185196**

(71) Applicant: **Mitsubishi Electric Corporation Tokyo, 100-8310 (JP)**

(72) Inventors:
• **HATTORI, Ryoji**
  **Tokyo 100-8310 (JP)**

• **MORIYA, Yoshimi**
  **Tokyo 100-8310 (JP)**
• **MINEZAWA, Akira**
  **Tokyo 100-8310 (JP)**
• **MIYAZAWA, Kazuyuki**
  **Tokyo 100-8310 (JP)**
• **SEKIGUCHI, Shunichi**
  **Tokyo 100-8310 (JP)**

(74) Representative: **Pfenning, Meinig & Partner mbB Patent- und Rechtsanwälte Theresienhöhe 11a 80339 München (DE)**

(54) **VIDEO ENCODING DEVICE, VIDEO TRANSCODING DEVICE, VIDEO ENCODING METHOD, VIDEO TRANSCODING METHOD AND VIDEO STREAM TRANSMISSION SYSTEM**

(57)    A variable length encoder 23 multiplexes hint information into an entire region bitstream, the hint information including motion vector limitation information indicating a maximum range in which a search for a motion vector can be performed, GOP size limitation information indicating a GOP size which is the number of pictures belonging to a GOP, and reference configuration specification information indicating a picture to be referred to at the time of decoding each picture belonging to the GOP. As a result, a bitstream of the entire region which is suitable for efficient generation, with a low operation amount, of a bitstream of a partial region can be generated without causing a reduction in the compression efficiency of the bitstream of the entire region.

FIG.1

## Description

FIELD OF THE INVENTION

The present invention relates to an image encoding device for and an image encoding method of compression-encoding an image to generate encoded data, a video transcoding device for and a video transcoding method of generating other encoded data having a different feature from the encoded data generated by the image encoding device, and a video stream transmission system for transmitting and receiving the encoded data generated by the image encoding device.

BACKGROUND OF THE INVENTION

As imaging equipment, display equipment, compression encoding techniques, transmission techniques, and so on progress, services for distribution of UHD (Ultra-High Definition) videos having definition (e.g., definition such as 4K or 8K) exceeding HD (High Definition) have been studied.

Because an ultra-high definition video has a huge amount of video information, an ultra-high definition video is compressed typically by using a video encoding technique at the time of carrying out transmission or storage of a video signal.

Hereafter, it is premised that at the time of transmitting an ultra-high definition video, the ultra-high definition video is handled in a bitstream form in which the video is compressed by using a predetermined video encoding technique.

There is assumed to be a case in which when a user watches and listens to an ultra-high definition video, it becomes difficult for the user to watch and listen to the video even if a fine structure (e.g., character information, a person's face, or the like) in the video exists as information included in the video because the apparent size of display equipment is too small as compared with the number of pixels of the video.

In order to solve this problem, there can be considered a system that displays an entire region of an ultra-high definition video transmitted thereto on main display equipment (e.g. , a large-screen TV placed in a living), and also extracts a video of a partial region specified by a user from the entire region of the ultra-high definition video and transmits the video of the partial region to sub display equipment (e.g., a tablet terminal in the user's hand) to enable the user to watch and listen to the video.

Although a partial region video is transmitted from the main display equipment to the sub display equipment in the above-mentioned system, it is desirable to, at the time of transmitting the partial region video, transmit the partial region video in the form of a bitstream including only information about the partial region video.

This is because when an entire region bitstream of an ultra-high definition video is transmitted, just as it is, without compressing the entire region bitstream of the ultra-high definition video into a partial region bitstream (a bitstream including only information about a partial region video), the amount of transmitted information increases very much while the processing load increases because the sub display equipment needs to decode the entire region of the ultra-high definition video.

It is therefore desirable that the main display equipment in the above-mentioned system has a transcoding function of generating an arbitrary partial region bitstream from the entire region bitstream of the ultra-high definition video.

As a method of generating an arbitrary partial region bitstream from the entire region bitstream, for example, the following methods can be considered.

[Method 1]

After decoding the entire region of the ultra-high definition video, the main display equipment extracts the decoded image of a partial region specified by a user from the decoded image of the entire region, and encodes the decoded image of the partial region again by using a predetermined video encoding technique.

The main display equipment then generates a partial region bitstream including the encoded data of the partial region which is the result of the encoding, and coding parameters.

However, a problem with the case of using the method 1 is that because it is necessary to encode the decoded image of the partial region again, the processing load on the main display equipment becomes large and the image quality degrades due to the re-encoding.

[Method 2]

The method 2 is disclosed by the following patent reference 1, and is a one of, when generating an entire region bitstream, performing tile partitioning to cut off reference between regions of an image.

More specifically, this method is a one of partitioning an entire region into images of rectangular regions which are referred to as tiles, and generating an entire region bitstream by encoding each of the rectangular regions, while imposing limitations on a local decoded image and coding parameters, the local decoded image and coding parameters being referred to at the time of encoding each of the rectangular regions, in such a way that reference across a tile boundary (this reference also including inter-frame reference and entropy encoding) is not carried out.

Because it becomes possible to decode each tile completely and independently by imposing such limitations, by simply extracting the encoded data and the coding parameters of a tile including a partial region specified by a user from the entire region bitstream, a partial region bitstream including the encoded data and the coding parameters of the partial region can be generated.

However, because the extraction of encoded data and coding parameters is carried out on a per tile basis in the case of using the method 2, a partial region bitstream including many regions unnecessary for display is generated and hence this generating process is inefficient when the partial region specified by the user extends across a plurality of tiles and when the tile size is larger than the size of the partial region.

Because the number of parts at each of which the reference is cut off increases as the tile size is reduced in order to improve the efficiency of generation of a partial region bitstream, there arises a problem that the compression efficiency of the entire region bitstream degrades.

RELATED ART DOCUMENT

PATENT REFERENCE

Patent reference 1: WO 2012/060459

SUMMARY OF THE INVENTION

PROBLEMS TO BE SOLVED BY THE INVENTION

Because conventional video encoding devices are configured as above, increase in the processing load and degradation in the image quality can be suppressed by simply partitioning the entire region into the images of rectangular regions (tiles), and then encoding each of the rectangular regions in a state in which reference across a tile boundary is prevented. However, a problem is that when the partial region specified by the user extends across a plurality of tiles, a partial region bitstream including many regions unnecessary for display is generated and hence this generating process is inefficient. On the other hand, a problem is that because the number of parts at each of which the reference is cut off increases as the tile size is reduced in order to improve the efficiency of generation of a partial region bitstream, the compression efficiency of the entire region bitstream degrades.

The present invention is made in order to solve the above-mentioned problems, and it is therefore an object of the present invention to provide a video encoding device and a video encoding method that can generate an entire region bitstream which is suitable for efficient generation, with a low operation amount, of a partial region bitstream without causing a reduction in the compression efficiency of the entire region bitstream.

It is another object of the present invention to provide a video transcoding device and a video transcoding method that can efficiently generate a partial region bitstream with a low operation amount.

It is a further object of the present invention to provide a video stream transmission systems that transmits and receives encoded data generated by an image encoding device.

MEANS FOR SOLVING THE PROBLEM

In accordance with the present invention, there is provided a video encoding device including: a prediction image generator to determine a coding parameter for a coding target block in a picture belonging to a GOP (Group Of Pictures), and to generate a prediction image by using the coding parameter; and a bitstream generator to compression-encode a difference image between the coding target block and the prediction image generated by the prediction image generator, and to multiplex encoded data which is the result of the encoding and the coding parameter to generate a bitstream, in which the bitstream generator multiplexes hint information into the bitstream, the hint information including motion vector limitation information indicating a range in which a search for a motion vector can be performed, GOP size limitation information indicating a GOP size which is the number of pictures belonging to the GOP, and reference configuration specification information indicating a picture to be referred to at the time of decoding each picture belonging to the GOP.

ADVANTAGES OF THE INVENTION

Because the bitstream generator in accordance with the present invention multiplexes the hint information into the bitstream, the hint information including the motion vector limitation information indicating the range in which a search for a motion vector can be performed, the GOP size limitation information indicating the GOP size which is the number of pictures belonging to the GOP, and the reference configuration specification information indicating a picture to be referred to at the time of decoding each picture belonging to the GOP, there is provided an advantage of being able to generate a bitstream of an entire region which is suitable for efficient generation, with a low operation amount, of a bitstream of a partial region without causing a reduction in the compression efficiency of the bitstream of the entire region.

BRIEF DESCRIPTION OF THE FIGURES

[Fig. 1] Fig. 1 is a block diagram showing a system to which a video encoding device and a video transcoding device in accordance with Embodiment 1 of the present invention are applied;
[Fig. 2] Fig. 2 is a block diagram showing the video encoding device 1 in accordance with Embodiment 1 of the present invention;
[Fig. 3] Fig. 3 is a block diagram showing an entire region stream decoder 3 of the video transcoding device 2 in accordance with Embodiment 1 of the present invention;
[Fig. 4] Fig. 4 is a block diagram showing a partial region transcoder 4 of the video transcoding device 2 in accordance with Embodiment 1 of the present invention;

[Fig. 5] Fig. 5 is a flow chart showing the details of processing (a video encoding method) performed by the video encoding device 1 in accordance with Embodiment 1 of the present invention; [Fig. 6] Fig. 6 is a flow chart showing the details of processing performed by the entire region stream decoder 3 of the video transcoding device 2 in accordance with Embodiment 1 of the present invention;

[Fig. 7] Fig. 7 is a flow chart showing the details of processing performed by the partial region transcoder 4 of the video transcoding device 2 in accordance with Embodiment 1 of the present invention;

[Fig. 8] Fig. 8 is an explanatory drawing showing an example in which each largest coding block is partitioned hierarchically into a plurality of coding target blocks;

[Fig. 9] Fig. 9(a) is an explanatory drawing showing a distribution of partitions after partitioning, and Fig. 9(b) is an explanatory drawing showing, by using a quadtree graph, a state in which coding modes $m(B^n)$ are assigned through hierarchical partitioning;

[Fig. 10] Fig. 10 is an explanatory drawing showing the meaning of information indicated by GOP size limitation information and reference configuration specification information;

[Fig. 11] Fig. 11 is a block diagram showing a system to which a video encoding device and a video transcoding device in accordance with Embodiment 2 of the present invention are applied;

[Fig. 12] Fig. 12 is an explanatory drawing showing an example in which an entire region image is partitioned into six subpictures;

[Fig. 13] Fig. 13 is a block diagram showing a video stream transmission system in accordance with Embodiment 3 of the present invention;

[Fig. 14] Fig. 14 is a block diagram showing the video stream transmission system in accordance with Embodiment 3 of the present invention; and

[Fig. 15] Fig. 15 is a block diagram showing a video stream transmission system in accordance with Embodiment 4 of the present invention.

EMBODIMENTS OF THE INVENTION

Hereafter, in order to explain this invention in greater detail, the preferred embodiments of the present invention will be described with reference to the accompanying drawings. Embodiment 1.

In this Embodiment 1, an explanation will be made as to a video encoding device that, by imposing a limitation on a maximum of a motion vector used at the time of performing an inter frame prediction, and a limitation on the number of frames between random access points, carries out encoding in such a way that the propagation range of pixel value information between random access points falls within certain limits, to generate a bitstream of an entire region, and that also multiplexes information indicating a limit value of the maximum of motion vectors, information indicating a limit value of the number of frames between random access points, and so on, as hint information, into the entire region bitstream.

Further, an explanation will be made as to a video transcoding device that decodes the encoded data of the entire region from the entire region bitstream generated by the above-mentioned video encoding device and also refers to the hint information multiplexed into the entire region bitstream, to specify encoded data and a coding parameter required at the time of correctly decoding a display area specified by a user from the encoded data and the coding parameters of the entire region, and that applies the encoded data and the coding parameter to generate a bitstream of a partial region with a low operation amount.

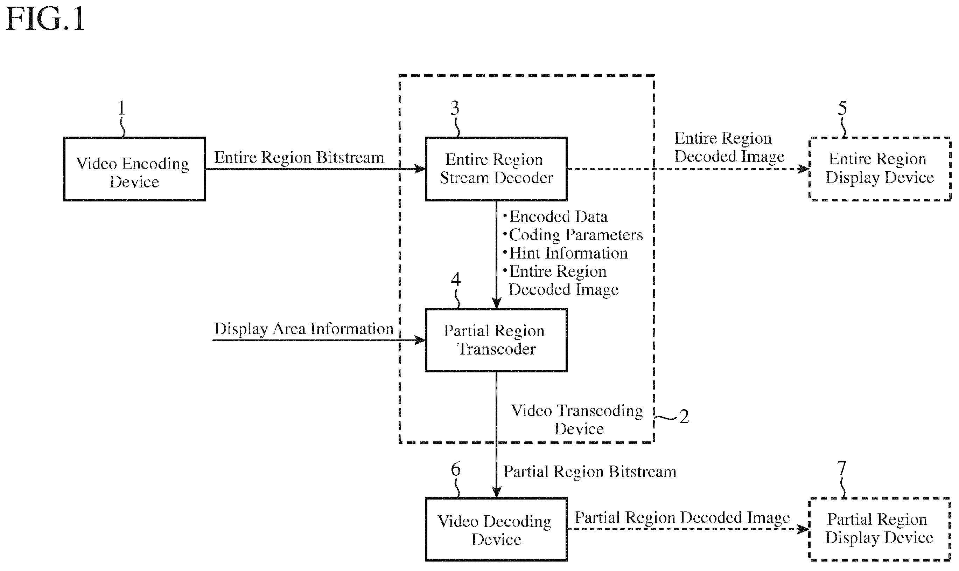

Fig. 1 is a block diagram showing a system to which the video encoding device and the video transcoding device in accordance with Embodiment 1 of the present invention are applied.

Referring to Fig. 1, the video encoding device 1 generates an entire region bitstream by performing an encoding process, in a form that enables the video transcoding device 2 in the next stage to process the entire region bitstream, on the picture of an entire region (a region including an entire frame) of an inputted video, and multiplexes hint information used for transcoding (the details of the hint information will be described below) into the entire region bitstream and outputs the entire region bitstream after multiplexing of the hint information to the video transcoding device 2.

More specifically, the video encoding device 1 performs a process of determining coding parameters for a coding target block in a picture belonging to a GOP (Group of pictures) and generating a prediction image by using the coding parameter, and also compression-encoding a difference image between the coding target block and the prediction image and multiplexing encoded data which is the result of the encoding and the coding parameters to generate an entire region bitstream. The video encoding device 1 also performs a process of multiplexing hint information into the entire region bitstream, the hint information including motion vector limitation information indicating a maximum range in which a search for a motion vector can be performed, GOP size limitation information indicating a maximum of a GOP size which is the number of pictures belonging to the GOP, and reference configuration specification information indicating a picture to be referred to at the time of decoding each picture belonging to the GOP, and outputting the entire region bitstream to the video transcoding device 2.

A GOP means a set of a certain random access point picture and pictures which are located continuously after the random access point picture in the decoding order and which are not random access points.

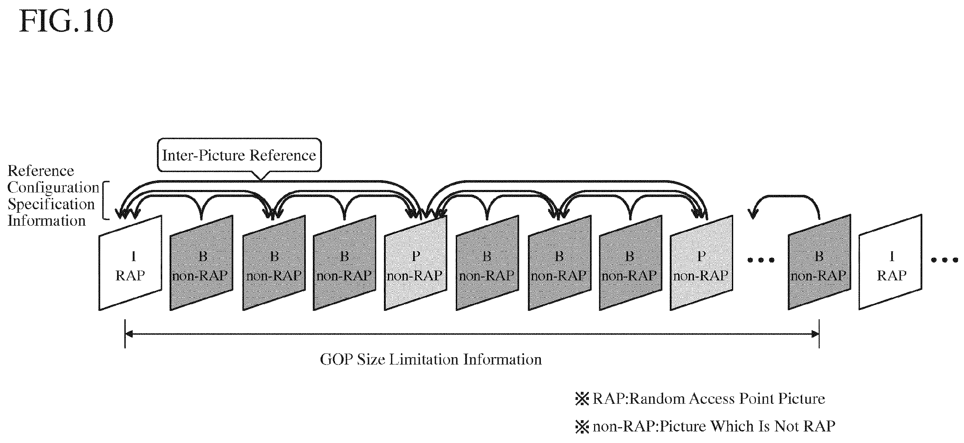

Fig. 10 is an explanatory drawing showing meanings indicated by the GOP size limitation information and the reference configuration specification information.

The GOP size limitation information indicates the size of a GOP which is defined as above. While a data configuration, which is referred to as GOPs, exists in a bitstream which a conventional video encoding device generates, information indicating the size of a GOP does not exist in the bitstream. More specifically, the number of pictures which are counted after a random access point picture is decoded until the next random access point picture is decoded is the GOP size, and therefore the decoding device cannot know the GOP size until decoding all of the GOP. The GOP size limitation information provides an advantage of notifying the GOP size to the decoding device before all of a GOP is decoded by multiplexing the GOP size limitation information into, for example, the encoded data of the frame at the beginning of the GOP.

The reference configuration specification information describes a reference configuration between pictures. A conventional video encoding device multiplexes only reference destination frame information of each frame on a per frame basis. More specifically, in order for the decoding device to know according to what type of reference configuration a GOP is encoded, the decoding device needs to decode all of the GOP. The reference configuration specification information provides an advantage of notifying the reference configuration to the decoding side before all of a GOP is decoded by multiplexing the reference configuration specification information into, for example, the encoded data of the frame at the beginning of the GOP.

The video transcoding device 2 is configured with an entire region stream decoder 3 and a partial region transcoder 4, and performs a process of decoding the image of the entire region from the entire region bitstream generated by the video encoding device 1, and outputting the image of the entire region (referred to as the "entire region decoded image" from here on) to an entire region display device 5.

The video transcoding device 2 also performs a process of extracting the hint information from the entire region bitstream generated by the video encoding device 1, and referring to the motion vector limitation information, the GOP size limitation information and the reference configuration specification information which are included in the hint information, to specify an indispensable encoded region which is a region required at the time of decoding a display area of a picture, the display area being indicated by display area information provided from the outside thereof.

The video transcoding device 2 further performs a process of extracting the encoded data and the coding parameters of a coding target block which is included in the indispensable encoded region from the entire region bitstream generated by the video encoding device 1, and generating a partial region bitstream in conformity with an encoding codec set in advance from the encoded data and the coding parameters.

The entire region stream decoder 3 performs a process of extracting the encoded data and the coding parameters of the entire region, and the hint information which are included in the entire region bitstream generated by the video encoding device 1, and decoding the encoded data and the coding parameters of the entire region into an entire region decoded image and outputting the entire region decoded image to the partial region transcoder 4 and the entire region display device 5, and also outputting the encoded data and the coding parameters of the entire region, and the hint information to the partial region transcoder 4.

The partial region transcoder 4 performs a process of referring to the motion vector limitation information, the GOP size limitation information and the reference configuration specification information which are included in the hint information outputted from the entire region stream decoder 3, to specify an indispensable encoded region which is a region required at the time of decoding the display area of a picture, the display area being indicated by the display area information provided from the outside thereof.

An indispensable encoded region determinator is configured with the entire region stream decoder 3 and the partial region transcoder 4.

The partial region transcoder 4 also performs a process of extracting the encoded data and the coding parameters of a coding target block which is included in the above-mentioned indispensable encoded region from among the encoded data and the coding parameters of the entire region which are outputted from the entire region stream decoder 3, and generating a partial region bitstream in conformity with the encoding codec set in advance from the encoded data and the coding parameters of the coding target block.

The partial region transcoder 4 constructs a parameter extractor and a partial region stream generator.

The entire region display device 5 is display equipment to display the entire region decoded image outputted from the entire region stream decoder 3.

The video decoding device 6 decodes an image of a partial region from the partial region bitstream outputted from the partial region transcoder 4, and outputs the image of the partial region (referred to as the "partial region decoded image" from here on) to a partial region display device 7.

The partial region display device 7 is display equipment to display the partial region decoded image outputted from the video decoding device 6.

As a concrete example of practical use, a case in which the video transcoding device 2 is built in a non-portable TV that can receive and play back an ultra-high definition video will be explained.

In this case, the video encoding device 1 is an encoder device existing on a side of a system to distribute an ultra-high definition video, to generate an entire region bitstream which is an object to be distributed.

Therefore, an entire region bitstream generated by the video encoding device 1 which is the encoder device is distributed to the non-portable TV via a predetermined transmission system.

The video transcoding device 2 which is built in the non-portable TV receives the entire region bitstream distributed thereto from the video encoding device 1 and then decodes the entire region bitstream into an entire region decoded image, thereby displaying the entire region decoded image on the entire region display device 5.

The non-portable TV in this example can transmit and receive data to and from a viewer's tablet terminal. When the user operates the tablet terminal to specify an arbitrary display area, the display area information indicating the display area is inputted to the video transcoding device 2 in the non-portable TV, and the video transcoding device 2 generates a partial region bitstream including coding parameters required to play back the display area specified by the user and transmits the partial region bitstream to the tablet terminal.

The video decoding device 6 is built in the tablet terminal, and the video decoding device 6 receives the partial region bitstream transmitted thereto from the video transcoding device 2 and decodes the partial region bitstream into a partial region decoded image, thereby displaying the partial region decoded image on the partial region display device 7.

The tablet terminal can also enlarge the partial region decoded image as appropriate and display the partial region decoded image.

By using the system shown in Fig. 1 in the above-mentioned way, the user is enabled to cause the tablet terminal in his or her hand to enlarge an arbitrary partial region as appropriate and display the arbitrary partial region while watching and listening to a TV video having ultra-high definition.

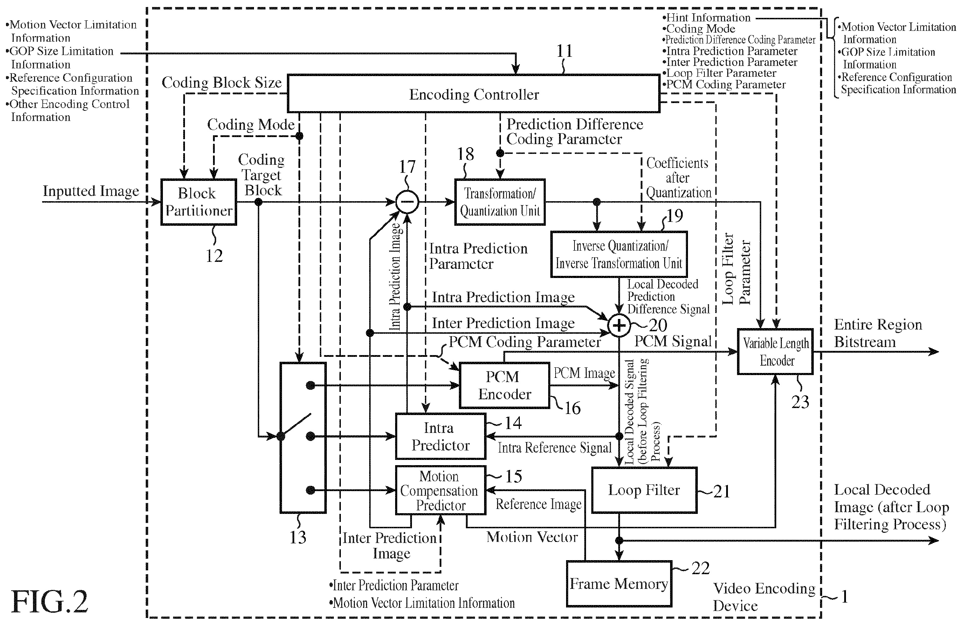

Fig. 2 is a block diagram showing the video encoding device 1 in accordance with Embodiment 1 of the present invention.

Referring to Fig. 2, an encoding controller 11 performs a process of receiving pieces of information including the motion vector limitation information, the GOP size limitation information, the reference configuration specification information and so on, determining the coding block size which is the size of a coding target block in a picture belonging to a GOP (an inputted image), and outputting the coding block size to a block partitioner 12.

The encoding controller 11 also performs a process of determining coding parameters on the basis of the GOP size limitation information, the reference configuration specification information, and so on

More specifically, the encoding controller 11 performs a process of determining, as the coding parameters, a coding mode (an intra coding mode, an inter coding mode or a PCM (Pulse Code Modulation) coding mode), a prediction parameter (an intra prediction parameter or an inter prediction parameter) and a PCM coding parameter of each coding target block.

The encoding controller 11 further performs a process of determining, as a coding parameter, a prediction difference coding parameter which is to be referred to when any of an orthogonal transformation process, a quantization process, and so on is performed, and outputting the prediction difference coding parameter to a transformation/quantization unit 18, an inverse quantization/inverse transformation unit 19 and a variable length encoder 23, and also determining, as a coding parameter, a loop filter parameter which is to be referred to when a filtering process is performed and outputting the loop filter parameter to a loop filter 21 and the variable length encoder 23.

In addition, the encoding controller 11 performs a process of outputting the motion vector limitation information to a motion compensation predictor 15, and outputting the hint information (the motion vector limitation information, the GOP size limitation information and the reference configuration specification information) to the variable length encoder 23.

The block partitioner 12 performs a process of, whenever receiving a picture belonging to a GOP (an inputted image), partitioning the picture into blocks each having the coding block size determined by the encoding controller 11, and outputting each coding target block which is a unit for prediction process to a select switch 13 and a subtractor 17.

The select switch 13 performs a process of outputting the coding target block outputted thereto from the block partitioner 12 to an intra predictor 14 when the coding mode determined by the encoding controller 11 is an intra coding mode, outputting the coding target block outputted thereto from the block partitioner 12 to the motion compensation predictor 15 when the coding mode determined by the encoding controller 11 is an inter coding mode, and outputting the coding target block outputted thereto from the block partitioner 12 to a PCM encoder 16 when the coding mode determined by the encoding controller 11 is a PCM coding mode.

The intra predictor 14 performs a process of performing an intra prediction process on the coding target block outputted from the select switch 13 by using the intra prediction parameter determined by the encoding controller 11 to generate an intra prediction image.

The motion compensation predictor 15 performs a process of comparing the coding target block outputted from the select switch 13 with a local decoded image after loop filtering process which is stored in a frame memory 22, to search for a motion vector in a region with the maximum range indicated by the motion vector limitation information outputted thereto from the encoding controller 11, and performing an inter prediction process on the coding target block by using both the motion vector and the inter prediction parameter determined by the encoding controller 11 to generate an inter prediction image.

The motion compensation predictor 15 performs a process of outputting, as a coding parameter, the motion vector which the motion compensation predictor has found out to the variable length encoder 23.

The PCM encoder 16 performs a process of, without performing any prediction process, converting pixel data of a region, in the picture (the inputted image), corresponding to the coding target block outputted from the select switch 13 into pixel data having a predetermined bit width by using the PCM coding parameter determined by the encoding controller 11, to generate a PCM signal (encoded data), and outputting the PCM signal to the variable length encoder 23, and also generating a PCM image by similarly converting the pixel data into pixel data having a predetermined bit width, and outputting the PCM image to the loop filter 21.

A prediction image generator is configured with the encoding controller 11, the block partitioner 12, the select switch 13, the intra predictor 14, the motion compensation predictor 15 and the PCM encoder 16.

The subtractor 17 performs a process of subtracting either the intra prediction image generated by the intra predictor 14 or the inter prediction image generated by the motion compensation predictor 15 from the coding target block outputted from the block partitioner 12, and outputting a prediction difference signal (a difference image) which is the result of the subtraction to the transformation/quantization unit 18.

The transformation/quantization unit 18 performs a process of referring to the prediction difference coding parameter determined by the encoding controller 11 and performing an orthogonal transformation process (e.g., an orthogonal transformation process, such as a DCT (discrete cosine transform) or a KL transform in which bases are designed for a specific learning sequence in advance) on the prediction difference signal outputted from the subtractor 17 to calculate transform coefficients, and also referring to the prediction difference coding parameter to quantize the transform coefficients, and outputting the transform coefficients quantized thereby (referred to as the "coefficients after quantization" from here on) to the inverse quantization/inverse transformation unit 19 and the variable length encoder 23.

The inverse quantization/inverse transformation unit 19 performs a process of referring to the prediction difference coding parameter determined by the encoding controller 11 to inverse-quantize the coefficients after quantization outputted from the transformation/quantization unit 18, and also referring to the prediction difference coding parameter and performing an inverse orthogonal transformation process on the transform coefficients after inverse quantization, to calculate a local decoded prediction difference signal corresponding to the prediction difference signal outputted from the subtractor 17.

An adder 20 performs a process of adding the difference image shown by the local decoded prediction difference signal calculated by the inverse quantization/inverse transformation unit 19 and either the intra prediction image generated by the intra predictor 14 or the inter prediction image generated by the motion compensation predictor 15, to calculate a local decoded image corresponding to the coding target block outputted from the block partitioner 12.

The loop filter 21 sequentially performs zero or more types of filtering processes on the basis of the filter parameter outputted thereto from the encoding controller 11. However, in a case in which the loop filter is configured in such a way as not to perform any loop filtering process on a coding target block in a PCM coding mode, the loop filter does not perform any loop filtering process on any coding target block in a PCM coding mode.

The frame memory 22 is a recording medium to store the local decoded image on which a loop filtering process is performed by the loop filter 21.

The variable length encoder 23 performs a process of variable-length-encoding the coefficients after quantization (the encoded data) outputted from the transformation/quantization unit 18, the coding mode (an intra coding mode, an inter coding mode or a PCM coding mode), the prediction parameter (the intra prediction parameter or the inter prediction parameter) or the PCM coding parameter, the prediction difference coding parameter and the filter parameter, which are outputted from the encoding controller 11, the motion vector (when the coding mode is an inter coding mode) outputted from the motion compensation predictor 15, the PCM signal (the encoded data) outputted from the PCM encoder 16, and the hint information (the motion vector limitation information, the GOP size limitation information and the reference configuration specification information) outputted from the encoding controller 11, to generate an entire region bitstream showing those encoded results.

A bitstream generator is configured with the subtractor 17, the transformation/quantization unit 18 and the variable length encoder 23.

In the example shown in Fig. 2, the encoding controller 11, the block partitioner 12, the select switch 13, the intra predictor 14, the motion compensation predictor 15, the PCM encoder 16, the subtractor 17, the transformation/quantization unit 18, the inverse quantization/inverse transformation unit 19, the adder, 20, the loop filter 21 and the variable length encoder 23, which are the components of the video encoding device 1, are assumed to be configured with pieces of hardware for exclusive use (e.g., semiconductor integrated circuits each equipped with a CPU, one chip microcomputers, or the likes), respectively. As an alternative, the video encoding device 1 can be configured with a computer.

In the case in which the video encoding device 1 is configured with a computer, the frame memory 22 is configured in an internal memory or an external memory of the computer, and a program in which the processes performed by the encoding controller 11, the block partitioner 12, the select switch 13, the intra predictor 14, the motion compensation predictor 15, the PCM encoder 16, the subtractor 17, the transformation/quantization unit 18, the inverse quantization/inverse transformation unit 19, the adder 20, the loop filter 21 and the variable length encoder 23 are described can be stored in a memory of the computer and a CPU of the computer can be made to execute the program stored in the memory.

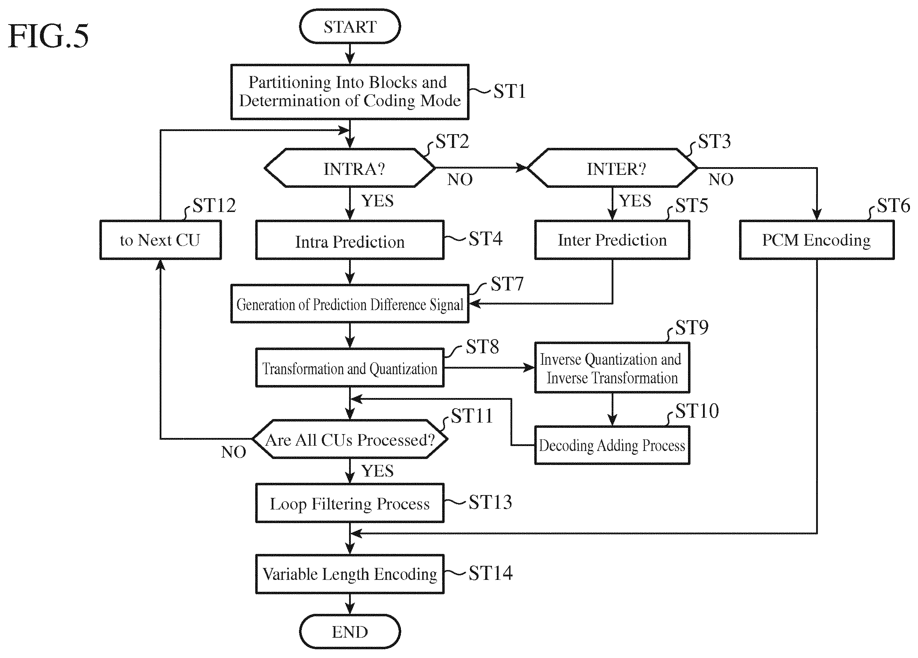

Fig. 5 is a flow chart showing the processing (a video encoding method) performed by the video encoding device 1 in accordance with Embodiment 1 of the present invention.

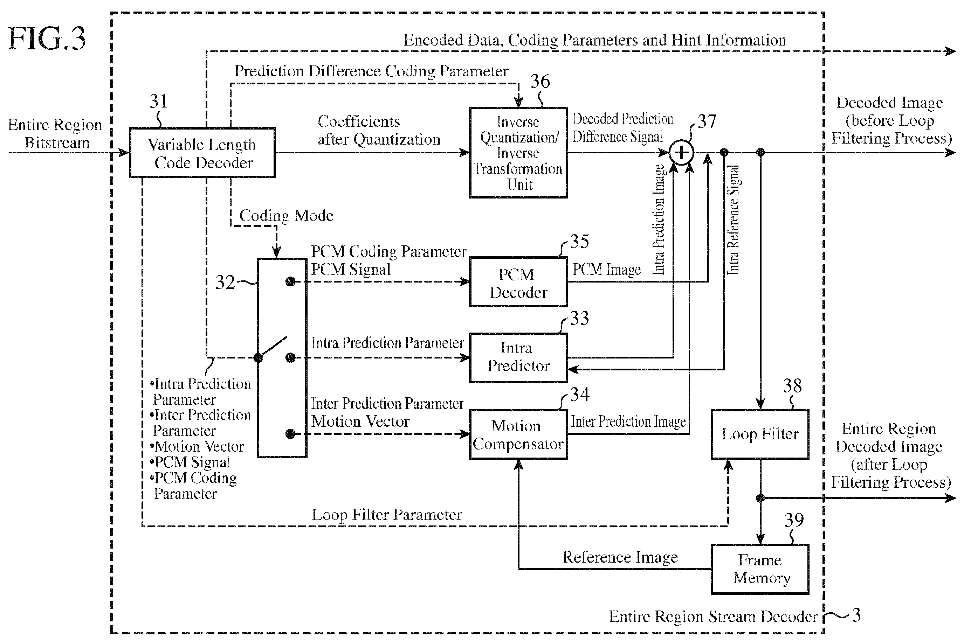

Fig. 3 is a block diagram showing the entire region stream decoder 3 of the video transcoding device 2 in accordance with Embodiment 1 of the present invention.

Referring to Fig. 3, a variable length code decoder 31 performs a process of, when receiving the entire region bitstream outputted from the variable length encoder 23 of the video encoding device 1 shown in Fig. 2, variable-length-decoding the encoded data (the coefficients after quantization or the PCM signal), the coding mode (an intra coding mode, an inter coding mode or a PCM coding mode), the intra prediction parameter (when the coding mode is an intra coding mode), the inter prediction parameter (when the coding mode is an inter coding mode), the motion vector (when the coding mode is an inter coding mode), the PCM coding parameter (when the coding mode is a PCM coding mode), the prediction difference coding parameter, the loop filter parameter and the hint information (the motion vector limitation information, the GOP size limitation information and the reference configuration specification information), which are associated with a decoding target block (a coding target block) which is a unit for prediction process, and outputting decoded results.

A select switch 32 performs a process of outputting the intra prediction parameter outputted thereto from the variable length code decoder 31 to an intra predictor 33 when the coding mode variable-length-decoded by the variable length code decoder 31 is an intra coding mode, outputting the inter prediction parameter and the motion vector which are outputted thereto from the variable length code decoder 31 to a motion compensator 34 when the coding mode variable-length-decoded by the variable length code decoder 31 is an inter coding mode, and outputting the PCM coding parameter and the PCM signal which are outputted thereto from the variable length code decoder 31 to a PCM decoder 35 when the coding mode variable-length-decoded by the variable length code decoder 31 is a PCM coding mode.

The intra predictor 33 performs a process of performing an intra prediction process on the decoding target block by using the intra prediction parameter outputted thereto from the select switch 32 to generate an intra prediction image.

The motion compensator 34 performs a process of performing an inter prediction process on the decoding target block by using the motion vector and the inter prediction parameter which are outputted thereto from the select switch 32, while referring to a decoded image after loop filtering process which is stored in a frame memory 39, to generate an inter prediction image.

The PCM decoder 35 performs a process of generating a PCM image by using the PCM coding parameter and the PCM signal which are outputted thereto from the select switch 32, and outputting the PCM image to a loop filter 38.

An inverse quantization/inverse transformation unit 36 performs a process of referring the prediction difference coding parameter outputted from the variable length code decoder 31 to inverse-quantize the coefficients after quantization outputted from the variable length code decoder 31, and also referring to the prediction difference coding parameter and performing an inverse orthogonal transformation process on the orthogonal transform coefficients after inverse quantization, to calculate a decoded prediction difference signal.

An adder 37 performs a process of adding a difference image shown by the decoded prediction difference signal calculated by the inverse quantization/inverse transformation unit 36 , and either the intra prediction image generated by the intra predictor 33 or the inter prediction image generated by the motion compensator 34, to generate a decoded image before loop filtering process, and also outputting the decoded image before loop filtering process to the loop filter 38 and outside the entire region stream decoder 3.

The loop filter 38 sequentially performs zero or more types of filtering processes on the basis of the filter parameter thereto outputted from the variable length code decoder 31. However, in a case in which the loop filter is configured in such a way as not to perform any loop filtering process on a decoding target block in a PCM coding mode, the loop filter does not perform any loop filtering process on any decoding target block in a PCM coding mode.

The frame memory 39 is a recording medium to store the decoded image on which a loop filtering process is performed by the loop filter 38.

In the example shown in Fig. 3, the variable length code decoder 31, the select switch 32, the intra predictor 33, the motion compensator 34, the PCM decoder 35, the inverse quantization/inverse transformation unit 36, the adder 37 and the loop filter 38, which are the components of the entire region stream decoder 3, are assumed to be configured with pieces of hardware for exclusive use (e.g., semiconductor integrated circuits each equipped with a CPU, one chip microcomputers, or the likes), respectively. As an alternative, the entire region stream decoder 3 can be configured with a computer.

In the case in which the entire region stream decoder 3 is configured with a computer, the frame memory 39 is configured in an internal memory or an external memory of the computer, and a program in which the processes performed by the variable length code decoder 31, the select switch 32, the intra predictor 33, the motion compensator 34, the PCM decoder 35, the inverse quantization/inverse transformation unit 36, the adder 37 and the loop filter 38 are described can be stored in a memory of the computer and a CPU of the computer can be made to execute the program stored in the memory.

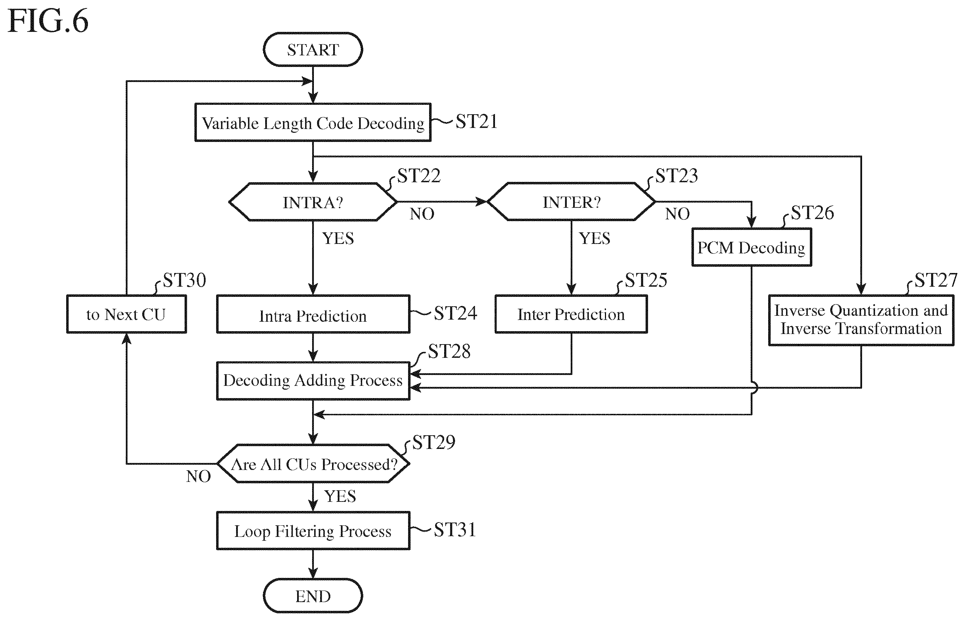

Fig. 6 is a flow chart showing the processing performed by the entire region stream decoder 3 of the video transcoding device 2 in accordance with Embodiment 1 of the present invention.

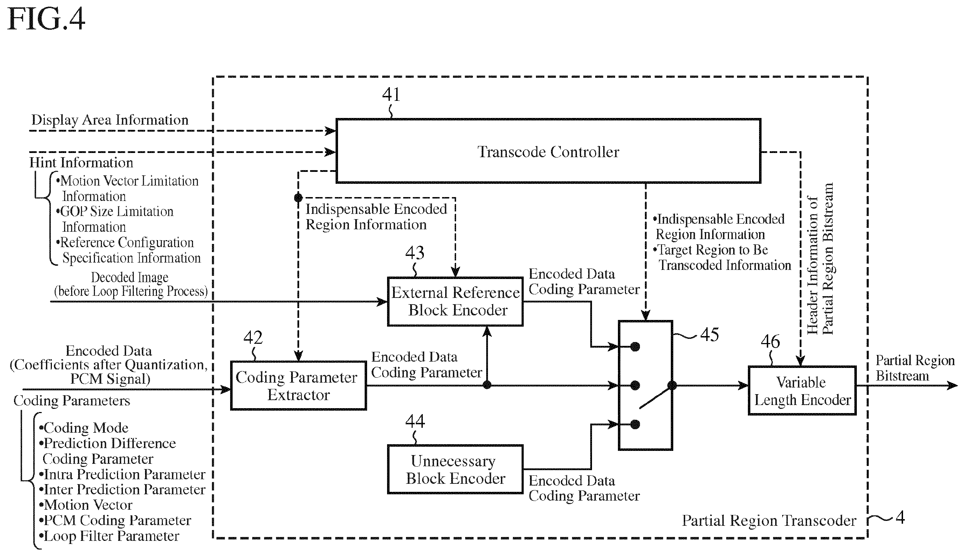

Fig. 4 is a block diagram showing the partial region transcoder 4 of the video transcoding device 2 in accordance with Embodiment 1 of the present invention.

Referring to Fig. 4, the transcode controller 41 performs a process of referring to the motion vector limitation information, the GOP size limitation information and the reference configuration specification information which are included in the hint information outputted from the entire region stream decoder 3, to specify a region which is a target for transcoding (a target region to be transcoded) from the display area of a picture, the display area being indicated by the display area information provided therefor from the outside thereof, and also specify an indispensable encoded region which is a region required at the time of decoding the target region to be transcoded (a region to which the coding parameters need to be applied at the time of transcoding), and outputting target region to be transcoded information indicating the target region to be transcoded and indispensable encoded region information indicating the indispensable encoded region.

When the indispensable encoded regions in the pictures belonging to a GOP have different sizes (for example, when the GOP size maximum indicated by the GOP size limitation information is N, and the reference configuration specification information indicates that an immediately preceding picture (frame) is referred to at the time of decoding each picture (frame), the size of the indispensable encoded region of the Nth picture (frame), among the indispensable encoded regions of the N pictures (frames), is the smallest and the size of the indispensable encoded region of the first picture (frame), among the indispensable encoded regions, is the largest), the transcode controller 41 determines, for example, the indispensable encoded region having the largest size to be the target region to be transcoded. Therefore, the following relation: the indispensable encoded region $\subseteq$ the target region to be transcoded is established.

The transcode controller 41 also performs a process of generating header information of a partial region bitstream on the basis of the target region to be transcoded information, and outputting the header information to a variable length encoder 46.

A coding parameter extractor 42 performs a process of extracting, from among the encoded data and the coding parameters of the entire region which are outputted from the entire region stream decoder 3, the encoded data (the count after quantization or the PCM signal) and the coding parameters (the coding mode (an intra coding mode, an inter coding mode or a PCM coding mode), the prediction parameter (the intra prediction parameter or the inter prediction parameter) or the PCM coding parameter, the motion vector (when the coding mode is an inter coding mode), the prediction difference coding parameter, the loop filter parameter and the hint information (the motion vector limitation information, the GOP size limitation information and the reference configuration specification information)) of a coding target block included in the indispensable encoded region indicated by the indispensable encoded region information outputted from the transcode controller 41, and outputting the encoded data and the coding parameters of the coding target block to an external reference block encoder 43 and a select switch 45.

The external reference block encoder 43 performs a process of, when a coding target block included in the indispensable encoded region indicated by the indispensable encoded region information outputted from the transcode controller 41 (a coding target block belonging to a boundary of the indispensable encoded region) is an external reference block on which intra encoding is performed by referring to the value of a pixel located outside the indispensable encoded region, encoding the decoded image of the coding target block by using an encoding method of not using the value of any pixel located outside the indispensable encoded region for prediction reference, and outputting encoded data which is the result of the encoding and the coding parameters used for the encoding of the above-mentioned decoded image to the select switch 45.

For example, when an intra coding mode in an intra encoding method of referring to the value of a pixel at a screen edge of a coding target block is used as the encoding method of not using the value of any pixel located outside the indispensable encoded region for prediction reference, the external reference block encoder generates an intra prediction image in the intra coding mode and also extracts the decoded image of the coding target block (an external reference block) from the entire region decoded image before loop filtering process outputted from the entire region stream decoder 3. The external reference block encoder then compression-encodes a difference image between the decoded image of the coding target block and the above-mentioned intra prediction image, and outputs encoded data (coefficients after quantization) which is the result of the encoding and the intra prediction parameter (a coding parameter) used when generating the above-mentioned intra prediction image to the select switch 45.

Further, when a PCM coding mode is used as the encoding method of not using the value of any pixel located outside the indispensable encoded region for prediction reference, the external reference block encoder extracts the decoded image of the coding target block (an external reference block) from the entire region decoded image before loop filtering process outputted from the entire region stream decoder 3. The external reference block encoder then performs PCM encoding on the decoded image, and outputs a PCM signal which is the result of the encoding and the PCM coding parameter (a coding parameter) used for the PCM encoding of the decoded image to the select switch 45.

An unnecessary block encoder 44 performs a process of encoding a coding target block (an unnecessary block) located outside the indispensable encoded region and inside the target region to be transcoded in, for example, a skip mode in an inter encoding method, and outputting encoded data which is the result of the encoding and the coding parameters used for the encoding of the above-mentioned coding target block to the select switch 45.

Although the example of performing encoding in the skip mode in the inter encoding method, and outputting the coding parameters used for the encoding in the skip mode to the select switch 45 is shown above, this embodiment is not limited to this example, and the unnecessary block encoder can alternatively output a dummy parameter set in advance to the select switch 45.

The select switch 45 performs a process of referring to the target region to be transcoded information and the indispensable encoded region information which are outputted thereto from the transcode controller 41, selecting the encoded data and the coding parameters which are outputted thereto from the coding parameter extractor 42 when the coding target block included in the indispensable encoded region is not an external reference block, selecting the encoded data and the coding parameters which are outputted thereto from the external reference block encoder 43 when the coding target block included in the indispensable encoded region is an external reference block, and selecting the encoded data and the coding parameters which are outputted thereto from the unnecessary block encoder 44 when the coding target block is an unnecessary block, and outputting the encoded data and the coding parameters which are selected thereby to the variable length encoder 46.

The variable length encoder 46 performs a process of variable-length-encoding the encoded data and the coding parameters which are outputted thereto from the select switch 45, to generate a partial region bitstream showing those encoded results, and also multiplexing the header information of the partial region bitstream outputted from the transcode controller 41 into that partial region bitstream and outputting the partial region bitstream after multiplexing of the header information (a partial region stream in conformity with a predetermined encoding codec).

Referring to Fig. 4, the transcode controller 41, the coding parameter extractor 42, the external reference block encoder 43, the unnecessary block encoder 44, the select switch 45 and the variable length encoder 46, which are the components of the partial region transcoder 4, are assumed to be configured with pieces of hardware for exclusive use (e.g., semiconductor integrated circuits each equipped with a CPU, one chip microcomputers, or the likes), respectively. As an alternative, the partial region transcoder 4 can be configured with a computer.

In the case in which the partial region transcoder 4 is configured with a computer, a program in which the processes performed by the transcode controller 41, the coding parameter extractor 42, the external reference block encoder 43, the unnecessary block encoder 44, the select switch 45 and the variable length encoder 46 are described can be stored in a memory of the computer and a CPU of the computer can be made to execute the program stored in the memory.

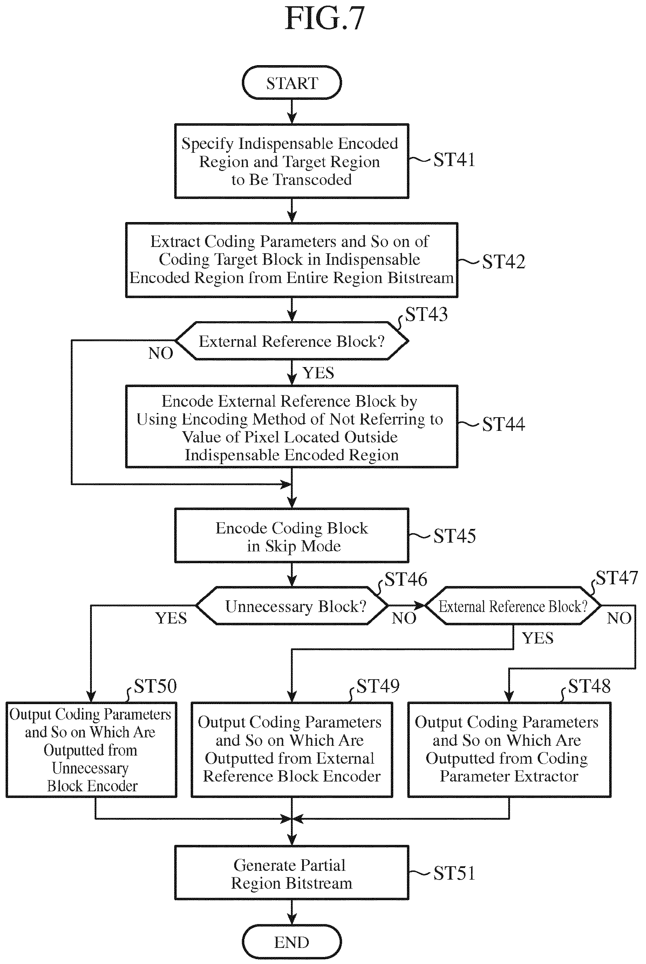

Fig. 7 is a flow chart showing the processing performed by the partial region transcoder 4 of the video transcoding device 2 in accordance with Embodiment 1 of the present invention.

Next, operations will be explained.

The video encoding device 1 shown in Fig. 2 is characterized in that the video encoding device uses an encoding method of compression-encoding an inputted image through intra prediction encoding, inter prediction encoding, or PCM encoding, and, when performing the inter prediction encoding, limits the maximum of motion vectors (limits the range in which a search for a motion vector is performed) by using the motion vector limitation information provided therefor from the outside thereof.

The video encoding device 1 is further characterized in that the video encoding device limits the GOP size and also limits the reference configuration to a specific pattern, the GOP size and the reference configuration serving as a base when determining a coding mode (an intra coding mode, an inter coding mode or a PCM coding mode) and a coding parameter (an intra prediction parameter, an inter prediction parameter or a PCM coding parameter), and multiplexes the hint information indicating the pieces of limitation information (the motion vector limitation information, the GOP size limitation information and the reference configuration specification information) into the entire region bitstream.

In the image encoding process, the compression efficiency is improved by using the fact that a typical image has a high correlation in its image features with a region spatiotemporally adjacent thereto. In the inter encoding (inter-frame reference encoding), the compression efficiency is improved by using the above-mentioned characteristics to predict the features of an image by referring to a region which exists in an already-encoded frame close in time to the image and which is spatially close to the image.

At that time, because there is a case in which an object in an image moves between frames, a process (a motion-compensated prediction process) of searching for a region having a high correlation, expressing a phase difference between a target region for prediction and the region having a high correlation by using information referred to as a motion vector, and absorbing the movement of the object.

Therefore, even when it is desired to decode only a specific limited region of a specific frame from the encoded stream, it is necessary to also decode a region to which is pointed by a motion vector, the region being in another frame which is referred to by that frame.

Because a frame decoded with inter-frame reference may be referred to by a subsequent frame, there is a case in which information about a certain region in the decoded image of a certain frame propagates to a region having a wider range than a subsequent frame in inter-frame reference. For example, there is a possibility that the propagation range of decoded image information practically spreads without limitation when no limitation is imposed on the maximum of motion vectors.

The video encoding device 1 in accordance with this Embodiment 1 has a configuration in which fixed limitations are imposed on motion vectors, the GOP size and the reference configuration, thereby suppressing the propagation of decoded image information to a fixed range and making it possible to transmit, as the hint information, those pieces of limitation information to the decoding side.

The format of a video signal to be processed by the video encoding device 1 shown in Fig. 1 is assumed to be an arbitrary video signal in which each video frame consists of a series of digital samples (pixels) in two dimensions, horizontal and vertical, including a color video signal in arbitrary color space, such as a YUV signal which consists of a luminance signal and two chrominance signals or an RGB signal outputted from a digital image sensor, a monochrome image signal, an infrared image signal and so on.

The gradation of each pixel can be an 8-bit, 10-bit, or 12-bit one.

In the following explanation, for the sake of convenience, the video signal of the inputted image is assumed to be, unless otherwise specified, a YUV signal, and a case of handling signals having a 4:2:0 format in which the two chrominance components U and V are subsampled with respect to the luminance component Y will be described.

Further, a data unit to be processed which corresponds to each frame of the video signal is referred to as a "picture. "

Although the explanation is made in this Embodiment 1 by assuming that a "picture" is a video frame signal on which progressive scanning is performed, when the video signal is an interlaced signal, a "picture" can be a field image signal which is a unit which constructs a video frame.

Hereafter, the processing performed by the video encoding device 1 will be explained.

The encoding controller 11 hierarchically partitions each image region having a predetermined largest coding block (a CTU or a macroblock) size into coding target blocks each having a coding block size until the number of hierarchical layers partitioned reaches its predetermined upper limit and determines a coding mode for each of the coding target blocks (step ST1 of Fig. 5).

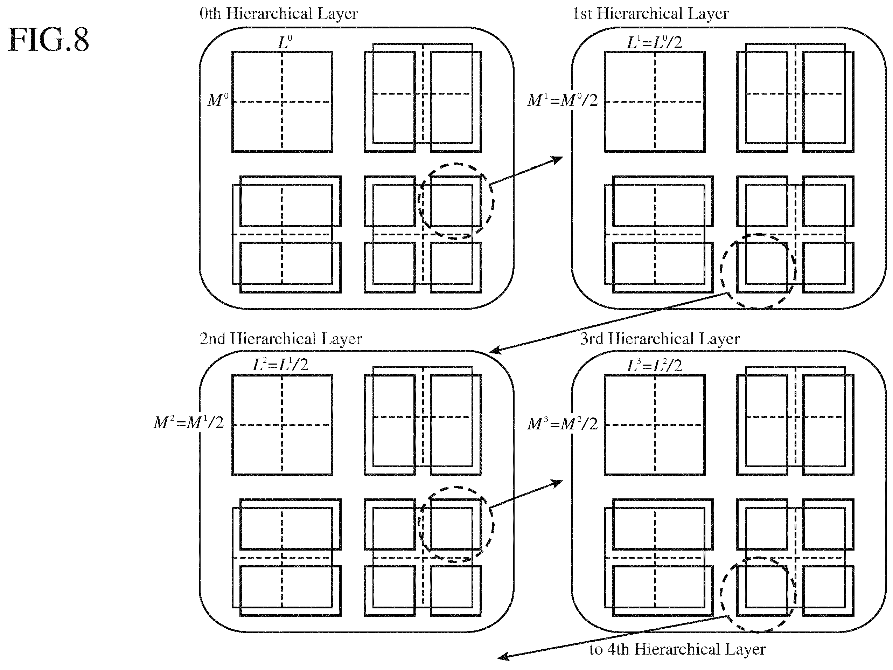

Fig. 8 is an explanatory drawing showing an example in which each largest coding block is hierarchically partitioned into a plurality of coding target blocks.

Referring to Fig. 8, each largest coding block is a coding target block whose luminance component, which is shown by "0th hierarchical layer", has a size of $(L^0, M^0)$.

By performing the hierarchical partitioning with a block having a CTU size being set as a starting point until the depth of the hierarchy reaches a predetermined depth which is set separately according to a quadtree structure, the coding target blocks can be acquired.

At the depth of n, each coding target block is an image region having a size of $(L^n, M^n)$.

Although $L^n$ can be the same as or different from $M^n$, the case of $L^n = M^n$ is shown in Fig. 8.

Hereafter, the coding block size determined by the encoding controller 11 is defined as the size of $(L^n, M^n)$ in the luminance component of each coding target block.

Because quadtree partitioning is performed, $(L^{n+1}, M^{n+1}) = (L^n/2, M^n/2)$ is always established.

In the case of a color video signal (4:4:4 format) in which all the color components have the same sample number, such as an RGB signal, all the color components have a size of $(L^n, M^n)$, while in the case of handling a 4:2:0 format, a corresponding chrominance component has a coding block size of $(L^n/2, M^n/2)$.

Hereafter, each coding target block in the nth hierarchical layer is expressed by $B^n$, and a coding mode selectable for each coding target block $B^n$ is expressed by $m(B^n)$.

In the case of a color video signal which consists of a plurality of color components, the coding mode $m(B^n)$ can be configured in such a way that an individual mode is used for each color component, or can be configured in such a way that a common mode is used for all the color components. Hereafter, an explanation will be made by assuming that the coding mode indicates a coding mode for the luminance component of each coding block when having a 4:2:0 format in a YUV signal unless otherwise specified.

The coding mode $m(B^n)$ is one of one or more intra coding modes (generically referred to as "INTRA"), one or more inter coding modes (generically referred to as "INTER"), and one or more PCM coding modes, and the encoding controller 11 selects a coding mode for each coding target block $B^n$ from among all the coding modes available in the picture currently being processed or a subset of those coding modes.

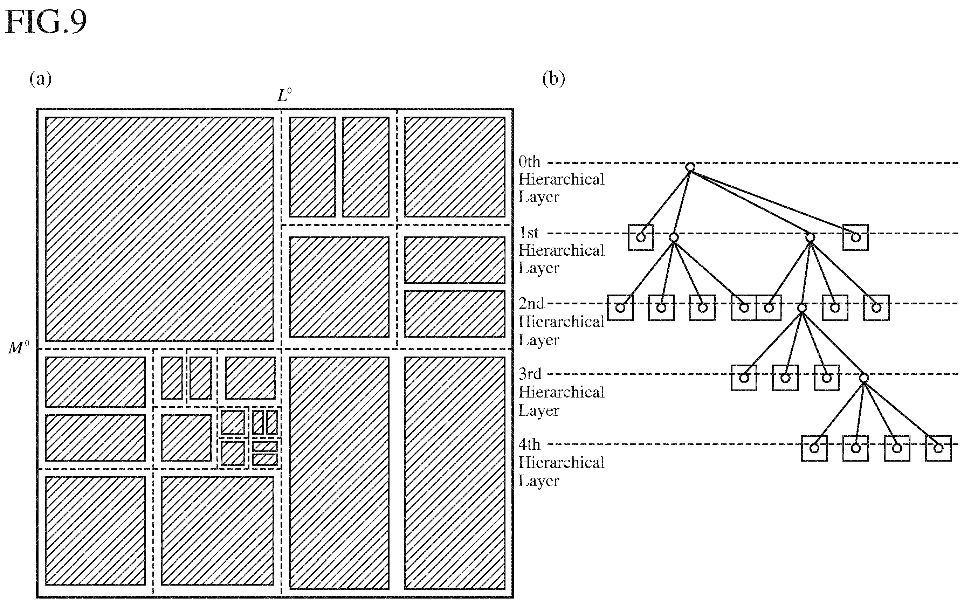

Each coding target block $B^n$ is further partitioned into one or more units (partitions) for prediction process by the block partitioner 12, as shown in Fig. 9.

Hereafter, each partition belonging to a coding target block $B^n$ is expressed by $P_i^n$ (i shows a partition number in the nth hierarchical layer).

How the partitioning of each coding target block $B^n$ into partitions is performed is included as information in the coding mode $m(B^n)$.

While a prediction process is performed on every partition $P_i^n$ according to the coding mode $m(B^n)$, a prediction parameter is selected for each coding target block $B^n$ or each partition $P_i^n$.

The encoding controller 11 generates such a block partitioning state as shown in, for example, Fig. 9 for each largest coding block, and then specifies coding target blocks.

Hatched portions shown in Fig. 9(a) show a distribution of partitions after the partitioning, and Fig. 9(b) shows a situation in which coding modes $m(B^n)$ are respectively assigned to the partitions according to the hierarchical layer partitioning, by using a quadtree graph.

Each node enclosed by □ shown in Fig. 9(b) is a node (a coding target block) to which a coding mode $m(B^n)$ is assigned.

The encoding controller 11 also outputs the motion vector limitation information provided therefor from the outside thereof to the motion compensation predictor 15.

The motion vector limitation information is used for implementing a function of limiting the maximum of the lengths of motion vectors, thereby imposing a limitation on up to which region of a subsequent frame information of a partial region of the decoded image of a certain frame spreads in a reference relation. This motion vector limitation information can be a fixed value for all the frames or can be a different value for each frame.

The encoding controller 11 further outputs the coding mode, the prediction difference signal parameter, the intra prediction parameter, the inter prediction parameter, the PCM coding parameter and the loop filter parameter, which are determined thereby, to the variable length encoder 23.

Further, the encoding controller outputs the motion vector limitation information, the GOP size limitation information and the reference configuration specification information, which are provided therefor the outside thereof, to the variable length encoder 23.

The process by the encoding controller 11 is performed on each picture inputted to the video encoding device 1. The type of each picture, the configuration of reference between pictures, and so on are controlled, in the encoding controller 11, according to the reference configuration specification information and the GOP size limitation information which are provided from the outside thereof, and other encoding control information, and the coding mode and the coding parameters are determined in the above-mentioned way according to those pieces of picture type information.

When the picture type is I picture, the coding mode is limited to an intra coding mode or a PCM coding mode.

Further, when the picture type is B picture or P picture, the coding mode is determined to be an intra coding mode, an inter coding mode or a PCM coding mode.

Further, when the picture type is B picture or P picture, it is also possible to perform a control operation of limiting the use of intra coding modes and the use of PCM coding modes for all the pictures according to other encoding control information.

When the coding mode $m(B^n)$ determined by the encoding controller 11 is an intra coding mode (when $m(B^n) \in$ INTRA), the select switch 13 outputs the coding target block $B^n$ outputted from the block partitioner 12 to the intra predictor 14 (step ST2).

When the coding mode $m(B^n)$ determined by the encoding controller 11 is an inter coding mode (when $m(B^n) \in$ INTER) , the select switch 13 outputs the coding target block $B^n$ outputted from the block partitioner 12 to the motion compensation predictor 15 (step ST3).

Further, when the coding mode $m(B^n)$ determined by the encoding controller 11 is a PCM coding mode, the select switch 13 outputs the coding target block $B^n$ outputted from the block partitioner 12 to the PCM encoder 16 (step ST3).

When the coding mode $m(B^n)$ determined by the encoding controller 11 is an intra coding mode (when $m(B^n)$EINTRA), and the intra predictor 14 receives the coding target block $B^n$ from the select switch 13, the intra predictor 14 performs an intra prediction process on each partition $P_i^n$ in the coding target block $B^n$ by using the intra prediction parameter determined by the encoding controller 11, to generate an intra prediction image $P_{INTRAi}^n$ (step ST4).

When the coding mode $m(B^n)$ determined by the encoding controller 11 is an inter coding mode (when $m(B^n) \in$ INTER) and the motion compensation predictor 15 receives the coding target block $B^n$ from the select switch 13, the motion compensation predictor 15 compares each partition $P_i^n$ in the coding target block $B^n$ and a motion-compensated prediction reference image stored in the frame memory 22 (a local decoded image of another frame after a loop filtering process is performed thereon), and searches for a motion vector.

However, when searching for a motion vector, the motion compensation predictor imposes a limitation on the length of the motion vector in such a way that the length of the motion vector does not exceed the maximum indicated by the motion vector limitation information outputted from the encoding controller 11 (searches for a motion vector in the region having the maximum range indicated by the motion vector limitation information).

The maximum indicated by the motion vector limitation information can be fixed for all the frames or can be different for each frame.

As an alternative, the maximum can be changed for each combination of the current frame and the reference destination frame. For example, the maximum of motion vectors can be specified in proportion to the difference in absolute value between the POC (Picture Order Count: a counter value which is incremented by 1 every time frames are counted in chronological order) of the current frame and the POC of the reference destination frame. In general, because the amount of inter-frame motion increases with increase in the difference in the POC between frames, it is rational to specify the maximum according to the rule as mentioned above.

Thus, information indicating according to what rule the maximum of motion vectors is specified can also be included in the motion vector limitation information.

After finding out a motion vector, the motion compensation predictor 15 performs an inter prediction process on each partition $P_i^n$ in the coding target block $B^n$ by using both the motion vector and the inter prediction parameter determined by the encoding controller 11, to generate an inter prediction image $P_{INTER_i}^n$ (step ST5).

When the coding mode $m(B^n)$ determined by the encoding controller 11 is a PCM coding mode and the PCM encoder 16 receives the coding target block $B^n$ from the select switch 13, the PCM encoder 16 performs a process of reducing the pixel gradation on each pixel included in the coding target block $B^n$ on the basis of the PCM coding parameter outputted from the encoding controller 11, and outputs, as a PCM signal, the pixel value whose gradation is reduced to the variable length encoder 23 (step ST6).

Further, after reducing the gradation, the PCM encoder 16 outputs, as a PCM image (a local decoded image in the PCM coding mode), the pixel value whose gradation is returned again to its original gradation to the loop filter 21.

Because the process of reducing the gradation of each pixel is not performed when the PCM coding parameter indicates that a gradation reduction is not performed, the value of each pixel in the coding target block $B^n$ can be encoded without degradation.

When receiving the coding target block $B^n$ from the block partitioner 12, the subtractor 17 subtracts either the intra prediction image $P_{INTRA_i}^n$ generated by the intra predictor 14 or the inter prediction image $P_{INTER_i}^n$ generated by the motion compensation predictor 15 from each partition $P_i^n$ in the coding target block $B^n$, and outputs a prediction difference signal which is the result of the subtraction to the transformation/quantization unit 18 (step ST7).

When receiving the prediction difference signal from the subtractor 17, the transformation/quantization unit 18 refers to the prediction difference coding parameter determined by the encoding controller 11 and performs an orthogonal transformation process (e.g., an orthogonal transformation process such as a DCT (discrete cosine transform) or a KL transform in which bases are designed for a specific learning sequence in advance) on the prediction difference signal, to calculate transform coefficients of the prediction difference signal.

The transformation/quantization unit 18 also refers to the prediction difference coding parameter to quantize the transform coefficients, and outputs the transform coefficients after quantization which are the transform coefficients quantized thereby to the inverse quantization/inverse transformation unit 19 and the variable length encoder 23 (step ST8).

When receiving the transform coefficients after quantization from the transformation/quantization unit 18, the inverse quantization/inverse transformation unit 19 refers to the prediction difference coding parameter determined by the encoding controller 11 to inverse-quantize the transform coefficients after quantization.

The inverse quantization/inverse transformation unit 19 also refers to the prediction difference coding parameter and performs an inverse orthogonal transformation process (e.g., an inverse DCT or an inverse KL transform) on the transform coefficients after inverse quantization, to calculate a local decoded prediction difference signal corresponding to the prediction difference signal outputted from the subtractor 17 (step ST9).

When receiving the local decoded prediction difference signal from the inverse quantization/inverse transformation unit 19, the adder 20 adds the difference image shown by the local decoded prediction difference signal and either the intra prediction image $P_{INTRA_i}^n$ generated by the intra predictor 14 or the inter prediction image $P_{INTER_i}^n$ generated by the motion compensation predictor 15 to calculate, as a local decoded partition image or a group of local decoded partition images, a local decoded image corresponding to the coding target block $B^n$ outputted from the block partitioner 12 (step ST10).

When the processes of steps ST2 to ST10 on all the coding target blocks $B^n$ are completed (steps ST11 and ST12), the loop filter 21 uses the local decoded image (the local decoded image before loop filtering process) outputted from the adder 20 to perform zero or more types of loop filtering processes on the basis of the loop filter parameter outputted from the encoding controller 11, and outputs the local decoded image after loop filtering process to the frame memory 22 (step ST13).

In the case in which the loop filter is configured in such a way as not to perform any loop filtering process on a coding target block $B^n$ in a PCM coding mode, the loop filter does not perform any loop filtering process on each coding target block $B^n$ in a PCM coding mode.

The variable length encoder 23 variable-length-encodes the coefficients after quantization (the encoded data) outputted from the transformation/quantization unit 18, the coding mode $m(B^n)$, the prediction parameter (the intra prediction parameter or the inter prediction parameter) or the PCM coding parameter, the prediction difference coding parameter and the filter parameter, which are outputted from the encoding controller 11, the motion vector (when the coding mode is an inter coding mode) outputted from the motion compensation predictor 15, the PCM signal (the encoded data) outputted from the PCM encoder 16 and the hint information (the motion vector limitation information, the GOP size limitation information and the reference configuration specification information) outputted from the encoding controller 11, to generate an entire region bitstream showing those encoded results. (step ST14).

Next, the details of processing performed by the entire region stream decoder 3 of the video transcoding device 2 will be explained. When receiving the entire region bitstream generated by the video encoding device 1, the variable length code decoder 31 determines a largest coding block size and an upper limit on the number of hierarchical layers partitioned by using the same method as that of the encoding controller 11 shown in Fig. 2.

When information indicating the largest coding block size and the upper limit on the number of hierarchical layers partitioned is multiplexed into the entire region bitstream, the variable length code decoder can determine the largest coding block size and the upper limit on the number of hierarchical layers partitioned by decoding the information.

Next, the variable length code decoder 31 decodes the coding mode which is multiplexed into the entire region bitstream and which is assigned to each largest coding block, and also decodes information (tile partitioning control information) indicating the partitioning state of each largest coding block, the partitioning state being included in the coding mode (step ST21 of Fig. 6).

After decoding the information indicating the partitioning state of each largest coding block, the variable length code decoder 31 also specifies decoding target blocks (coding target blocks) into which each largest coding block is partitioned hierarchically on the basis of the partitioning state of the largest coding block.

The variable length code decoder 31 further partitions each of the decoding target blocks into one or more units for prediction process on the basis of the partitioning state of the decoding target block, and decodes the coding parameters assigned to each coding target block or each unit for prediction process (step ST21).

When the coding mode assigned to a decoding target block (a coding target block) is an intra coding mode, the variable length code decoder 31 decodes the intra prediction parameter for each of one or more partitions included in the decoding target block (step ST21).

When the coding mode assigned to a decoding target block is an inter coding mode, the variable length code decoder decodes the inter prediction parameter for the decoding target block or for each of one or more partitions included in the decoding target block (step ST21).

When the coding mode assigned to a decoding target block is a PCM coding mode, the variable length code decoder decodes the PCM signal and the PCM coding parameter which are assigned to the decoding target block (step ST21).

When the coding mode assigned to a decoding target block is an intra coding mode or an inter coding mode, the variable length code decoder 31 further partitions each partition which is a unit for prediction process into one or more partitions each of which is a unit for transformation process on the basis of information about a transformation block size, this information being included in the prediction difference coding parameter included in the coding parameters, and decodes the coefficients after quantization for each partition which is a unit for transformation process (step ST21).

In addition, the variable length code decoder 31 decodes the filter parameter multiplexed into the entire region bitstream and outputs the filter parameter to the loop filter 38 (step ST21).

The variable length code decoder 31 outputs all the decoded coding parameters (the coding mode, the intra prediction parameter, the inter prediction parameter, the PCM coding parameter, the motion vector, the prediction difference coding parameter and the loop filter parameter), the hint information (the motion vector limitation information, the GOP size limitation information and the reference configuration specification information) and the encoded data (the coefficients after quantization and the PCM signal) to the partial region transcoder 4 shown in Fig. 4.

When the coding mode $m(B^n)$ variable-length-decoded by the variable length code decoder 31 is an intra coding mode (when $m(B^n) \in$ INTRA), the select switch 32 outputs the intra prediction parameter variable-length-decoded by the variable length code decoder 31 to the intra predictor 33 (step ST22).

When the coding mode $m(B^n)$ variable-length-decoded by the variable length code decoder 31 is an inter coding mode (when $m(B^n) \in$ INTER), the select switch 32 outputs the inter prediction parameter and the motion vector which are variable-length-decoded by the variable length code decoder 31 to the motion compensator 34 (step ST23).

When the coding mode $m(B^n)$ variable-length-decoded by the variable length code decoder 31 is a PCM coding mode, the select switch 32 outputs the PCM signal and the PCM coding parameter which are variable-length-decoded by the variable length code decoder 31 to the PCM decoder 35 (step ST23).

When the coding mode $m(B^n)$ variable-length-decoded by the variable length code decoder 31 is an intra coding mode (when $m(B^n) \in$ INTRA) and the intra predictor 33 receives the intra prediction parameter from the select switch 32, the intra predictor 33 performs an intra prediction process on each partition $P_i^n$ in the decoding target block $B^n$ by using the intra prediction parameter, according to the same procedure as that of the intra predictor 14 shown in Fig. 2, to generate an intra prediction image $P_{INTRAi}^n$, and outputs the intra prediction image $P_{INTRAi}^n$ to the adder 37 (step ST24).

When the coding mode $m(B^n)$ variable-length-decoded by the variable length code decoder 31 is an inter coding mode (when $m(B^n) \in$ INTER) and the motion compensator 34 receives the inter prediction parameter and the motion vector from the select switch 32, the motion compensator 34 performs an inter prediction process on either the decoding target block $B^n$ or each partition $P_i^n$ by using the motion vector and the inter prediction parameter while referring to the decoded image after loop filtering process stored in the frame memory 39, to generate an inter prediction image $P_{INTERi}^n$, and outputs the inter prediction image $P_{INTER}^{in}$ to the adder 37 (step ST25).

When the coding mode m(B^n) variable-length-decoded by the variable length code decoder 31 is a PCM coding mode and the PCM decoder 35 receives the PCM signal and the PCM coding parameter from the select switch 32, the PCM decoder 35 performs a process of restoring the gradation of the PCM signal corresponding to each pixel of the decoding target block $B^n$ to the gradation of a decoded image on the basis of the PCM coding parameter, and outputs the decoded image before loop filtering process of the restored decoding target block $B^n$ to the loop filter 38 (step ST26). The PCM decoder also outputs the decoded image before loop filtering process to the partial region transcoder 4 shown in Fig. 4.

When receiving the coefficients after quantization and the prediction difference coding parameter from the variable length code decoder 31, the inverse quantization/inverse transformation unit 36 refers to the prediction difference coding parameter to inverse-quantize the coefficients after quantization, according to the same procedure as that of the inverse quantization/inverse transformation unit 19 shown in Fig. 2, and also performs an inverse orthogonal transformation process on the transform coefficients after inverse quantization to calculate a decoded prediction difference signal corresponding to the prediction difference signal outputted from the subtractor 17 shown in Fig. 2, and outputs the decoded prediction difference signal to the adder 37 (step ST27).

The adder 37 adds the difference image shown by the decoded prediction difference signal calculated by the inverse quantization/inverse transformation unit 36 and either the intra prediction image $P_{INTRAi}^n$ generated by the intra predictor 33 or the inter prediction image $P_{INTER}^n$ generated by the motion compensator 34, and outputs, as a group of one or more decoded partition images included in the decoding target block, a decoded image to the loop filter 38 (step ST28). The adder also outputs the decoded image before loop filtering process to the partial region transcoder 4 shown in Fig. 4.

When the processes of steps ST21 to ST28 on all the coding target blocks $B^n$ in the picture are completed (steps ST29 and ST30), the loop filter 38 performs zero or more types of loop filtering processes on the decoded image before loop filtering process outputted from either the adder 37 or the PCM decoder 35 on the basis of the filter parameter outputted from the variable length code decoder 31, and stores the decoded image after loop filtering process in the frame memory 39 (step ST31).

As an alternative, the decoded image after loop filtering process can be outputted to outside the video transcoding device 2.

Next, the details of processing performed by the partial region transcoder 4 of the video transcoding device 2 will be explained. When receiving the hint information (the motion vector limitation information, the GOP size limitation information and the reference configuration specification information) from the entire region stream decoder 3 shown in Fig. 3, the transcode controller 41 refers to the motion vector limitation information, the GOP size limitation information and the reference configuration specification information which are included in the hint information, to specify a region which is a target for transcoding (a target region to be transcoded) from the display area of the picture, the display area being indicated by the display area information provided therefor from the outside thereof, and also specify an indispensable encoded region which is a region required to decode the target region to be transcoded (a region where decoding which is the same as or close to that on the entire region decoded image is guaranteed, and to which the coding parameters need to be applied at the time of transcoding), and outputs target region to be transcoded information indicating the target region to be transcoded and indispensable encoded region information indicating the indispensable encoded region (step ST41 of Fig. 7).

When the indispensable encoded regions in the pictures belonging to a GOP have different sizes, the transcode controller determines, for example, an indispensable encoded region having the largest size to be a target region to be transcoded common among the pictures.

Hereafter, the process of specifying the target region to be transcoded information and the indispensable encoded region which is performed by the transcode controller 41 will be explained concretely.

In the video decoding process, a process of generating a decoded image by adding the prediction image which is acquired by performing a motion-compensated prediction process (an image at a position which is determined on the basis of a motion vector while a decoded frame is referred to), and the prediction difference signal is performed.

When a random access point frame which is a frame at the head of a GOP is expressed by $F_1$ and a frame which refers to a frame $F_n$ is expressed by $F_{n+1}$, and a region to be decoded in the frame $F_n$ is a partial region $P_n$, it is necessary to, for the frame $F_{n-1}$, determine the whole of a partial region $P_{n-1}$ of the frame $F_{n-1}$ to which the partial region $P_n$ of the frame $F_n$ refers to be a target region to be decoded.

At that time, because the inter-frame reference in the motion-compensated prediction process is the one in which the frame $F_n$ refers to the frame $F_{n-1}$, the frame $F_{n-1}$ refers to the frame $F_{n-2}$, and which is performed in a multistage way within the GOP until the inter-frame reference reaches $F_1$ which is a frame which does not refer to any frame, the inter-frame dependency relation propagates from the frame $F_1$ to the frame $F_n$.

Therefore, in the reference configuration within the GOP, in order to correctly decode a partial region $P_N$ of a frame $F_N$ belonging to a final stage, it is necessary to determine the partial regions $P_1$ to $P_N$ of frames from the frame $F_1$ up to the frame $F_N$, which are based on the propagation of the above-mentioned dependency relation, to be target regions to be decoded.

Supposing that the video transcoding device 2 processes, instead of the entire region bitstream outputted from the video encoding device 1 shown in Fig. 2, a bitstream in which no limitations are imposed on motion vectors, the GOP size and the reference configuration, the video transcoding device 2 must analyze all the motion vectors of the frame $F_{n+1}$ to determine a region to which each of those motion vectors points, in order to determine the partial region $P_n$ of the frame $F_n$, and therefore the time required for the analysis becomes long.

Further, because the maximum of the GOP size and the maximum of motion vectors, and the reference configuration differ according to bitstreams, the shape and the size of the partial region $P_n$ of each frame $F_n$ for the same display area specification information are indefinite according to bitstreams, and it becomes difficult to handle the partial region both in the transcoding process and in a process of decoding the stream after transcoding.

However, in accordance with this Embodiment 1, because in the entire region bitstream outputted from the video encoding device 1 shown in Fig. 2, limitations are imposed on motion vectors, the GOP size and the reference configuration according to the hint information, as mentioned above, it becomes possible to fixedly determine the partial region $P_n$ of each frame $F_n$ with a low operation amount by performing the following process.

It is hereafter premised that, for simplification of implementation, when the partial region $P_n$ of each frame $F_n$ is not a rectangular region, a rectangular region $PL_n$ including the partial region $P_n$ is determined to be the target to be decoded.

Further, there will be considered a case in which the maximum of the absolute values of the horizontal and vertical components of a motion vector, the maximum being indicated by the motion vector limitation information included in the hint information, is a fixed value V [pixels] in all the frames. It is further assumed that the rectangular region to be decoded of the frame $F_n$ which refers to the frame $F_{n-1}$ is $PL_n$.

In this case, the rectangular region to be decoded $PL_{n-1}$ of the frame $F_{n-1}$ can be determined to be a rectangular region in which V pixels are fixedly added to the periphery of the rectangular region to be decoded $PL_n$ without analyzing the value of a motion vector. This is because the maximum of motion vectors is V, and hence the amount of protrusion of a motion vector pointing to a point outside the rectangular region to be decoded $PL_n$ is suppressed to at most V pixels.

Because the dependency relation of the reference propagates from the random access point frame $F_1$, the rectangular region to be decoded PL1 of the frame $F_1$ can be determined as a rectangular region in which $V*(n-1)$ pixels are added to the periphery of the rectangular region to be decoded $PL_n$.

It is further possible to similarly determine the rectangular region to be decoded $PL_n$ of each frame $F_n$

even when the maximum of motion vectors is different in each frame. For example, when the maximum of motion vectors of the frame $F_n$ is expressed by Vn, with respect to the rectangular region to be decoded $PL_N$ of the frame $F_N$, the rectangular region to be decoded $PL_n$ of the frame $F_n$ (n<N) is determined as a rectangular region in which pixels $V_{sum}$ are added to the periphery of the rectangular region to be decoded $PL_N$.

$$V_{sum} = \sum_{i=n+1}^{N} V_i$$

Further, when the maximum of motion vectors is specified in such a way as to be in proportion to the difference in absolute value between the POC of the frame $F_n$ and that of the reference destination frame $F_{n-1}$, as described in the explanation of the video encoding device 1, the rectangular region to be decoded is determined as follows.

It is considered first that when the difference in absolute value between the POC of the frame $F_n$ and that of the reference destination frame $F_{n-1}$ is expressed by d $(F_n-F_{n-1})$, the maximum of motion vectors in the case in which Fn refers to $F_{n-1}$ is determined to be $\alpha d(F_n-F_{n-1})$ ($\alpha$ is a fixed coefficient).

In this case, with respect to the rectangular region to be decoded $PL_N$ of the frame $F_N$, the rectangular region to be decoded $PL_n$ of the frame $F_n$ (n<N) is determined as a rectangular region in which pixels $V_{sum}$ are added to the periphery of the rectangular region to be decoded $PL_N$.

$$V_{sum} = \sum_{i=n+1}^{N} \alpha d(F_i - F_{i-1})$$

Further, the above-mentioned equation can be simplified as follows.

$$V_{sum} = \alpha d(F_N - F_n)$$

More specifically, the value of $V_{sum}$ is decided from the difference in absolute value between the POC of $F_N$ and that of $F_n$.

Further, when the rectangular region to be decoded PLm of the frame $F_m$ (m<n) (a rectangular region in which pixels $V_{sum}'$ are added to the periphery of the rectangular region to be decoded $PL_N$), with respect to the rectangular region to be decoded $PL_n$ of the frame $F_n$, is called a dependence rectangular region $PDL_{nm}$ with respect to the frame $F_m$ of the rectangular region to be decoded $PL_n$, in the case in which the reference configuration is a one in which a certain frame is referred to by a plurality of frames, the largest dependence rectangular region, among the dependence rectangular regions which are determined from the reference source frames, is determined to be the rectangular region to be decoded of that frame.

$$V_{sum}' = \sum_{i=m+1}^{n} V_i$$

As mentioned above, in order to, consistently within a GOP, generate a partial region bitstream which makes it possible to correctly decode a specific partial region, it is necessary to include at least information about the rectangular region to be decoded of each frame in the bitstream. Further, because it is impossible or difficult to change the size (the numbers of pixels in horizontal and vertical directions) of each frame within a GOP, it is necessary to set the size of each frame in a GOP to be equal to a size including the largest rectangular region to be decoded (in many cases, the rectangular region to be decoded of the frame $F_1$) among the rectangular regions to be decoded of all the frames in the GOP.

On the basis of these requirements, when the display area information is provided from the outside thereof, the transcode controller 41 determines the indispensable encoded region and the target region to be transcoded according to the following procedure.

(1) Set the rectangular region to be decoded of a frame (a non-reference frame: an I picture) which is not referred to, among frames other than the frame $F_1$ in a GOP, as a region including the display area.
(2) Determine the sizes of dependence rectangular regions for all the frames from the rectangular regions to be decoded of non-reference frames which are set in the process (1), and set the largest dependence rectangular region in each frame to be the rectangular region to be decoded of that frame.
(3) Set the rectangular region to be decoded of each frame in a GOP as the indispensable encoded region of that frame.
(4) Uniformly set a region including the largest rectangular region to be decoded in the frames in a GOP as the target region to be transcoded of each frame in the GOP.

When receiving the indispensable encoded region information from the transcode controller 41, the coding parameter extractor 42 extracts, from among the encoded data and the coding parameters of the entire region which are outputted from the entire region stream decoder 3, the encoded data (the count after quantization or the PCM signal) and the coding parameters (the coding mode (an intra coding mode, an inter coding mode or a PCM coding mode), the prediction parameter (the intra prediction parameter or the inter prediction parameter) or the PCM coding parameter, the motion vector (when the coding mode is an inter coding mode), the prediction difference coding parameter, the loop filter parameter, and the hint information (the motion vector limitation information, the GOP size limitation information and the reference configuration specification information)) of a coding target block included in the indispensable encoded region indicated by the indispensable encoded region information (including a coding target block only a part of which is included in the indispensable encoded region), and outputs the encoded data and the coding parameters of the coding target block which are extracted thereby to the external reference block encoder 43 and the select switch 45 (step ST42).

When receiving the indispensable encoded region information from the transcode controller 41, the external reference block encoder 43 checks to see whether or not each coding target block included in the indispensable encoded region indicated by the indispensable encoded region information (each coding target block belonging to a boundary of the indispensable encoded region) is an external reference block on which intra encoding is performed by referring to the value of a pixel located outside the indispensable encoded region (step ST43).

Whether or not each coding target block included in the indispensable encoded region is an external reference block can be determined by extracting the coding parameters of that coding target block from the encoded data and the coding parameters of the entire region which are outputted from the entire region stream decoder 3, and then checking the coding mode and the prediction parameter which are included in the coding parameters.

When a coding target block included in the indispensable encoded region is an external reference block, the external reference block encoder 43 encodes the decoded image of the coding target block by using an encoding method of not using the value of any pixel located outside the indispensable encoded region for prediction reference, and outputs encoded data which is the result of the encoding and the coding parameters used for the encoding of the above-mentioned decoded image to the select switch 45 (step ST44).

The reason why, when a coding target block is an external reference block, instead of extracting the encoded data and the coding parameters of that coding target block from the encoded data and the coding parameters of the entire region, the encoded data and the coding parameters of the coding target block are newly re-determined is that because a region located outside the indispensable encoded region is close to the decoded image before transcoding and no decoded result is guaranteed, an intra encoding prediction referring to the region results in a prediction result different from a one which will be originally provided.

As a method of re-determining the encoded data and the coding parameters, the following methods are provided, for example.

(1) Method of extracting the decoded image of the external reference block from the decoded image (before loop filtering process) of the entire region which is outputted from the entire region stream decoder 3, and encoding the decoded image of the external reference block in a PCM coding mode according to the same procedure as that of the PCM encoder 16 of the video encoding device 1. A PCM signal (encoded data) which is the result of the encoding and the PCM coding parameter used for the encoding are outputted to the select switch 45.

In the case of using this method, a result which is completely the same as the inputted decoded image can be decoded, depending on the accuracy of the PCM encoding.

(2) Method of performing PCM encoding only on pixels used for reference which are included in a coding target block to which the external reference block refers at the time of intra prediction and which is located outside the indispensable encoded region, on the basis of the inputted decoded image, and outputting a PCM signal (encoded data) which is the result of the encoding to the select switch 45. However, as to coding parameters such as an intra prediction parameter, coding parameters of the external reference block are extracted from the coding parameters of the entire region and are outputted to the select switch 45.

In the case of using this method, a result which is completely the same as the inputted decoded image can be decoded, depending on the accuracy of the PCM encoding. Depending on the size of the external reference block, the code amount can be further reduced as compared with the case of using the method (1).

(3) Method of, because the decoded image of a block located outside the indispensable encoded region is determined on the basis of a result acquired by the unnecessary block encoder 44 which will be described below, using the decoded image, just as it is, to determine the coding parameters in such a way that a result close to the inputted decoded image is acquired through an intra encoding prediction or an inter encoding prediction.

The determination of the coding parameters by using the method (3) can be carried out by using the same method as the encoding method for use in the video encoding device 1 shown in Fig. 2.

(4) Method of enlarging the indispensable encoded region to make the indispensable encoded region in that frame match the decoded region, and encoding the external reference block by using the same method as an intra coding prediction referring to the outside of the screen.

The unnecessary block encoder 44 encodes each coding target block (unnecessary block) which is located outside the indispensable encoded region and inside the target region to be transcoded, in, for example, a skip mode in the inter encoding method, and outputs encoded data which is the result of the encoding and the coding parameters used for the encoding of the above-mentioned coding target block to the select switch 45 (step ST45).

Because an unnecessary block is needed for making the frame size uniform within each GOP while an unnecessary block is a coding target block belonging to an image region which is not used for display and reference from a subsequent frame, the result of decoding an unnecessary block can be any result. Therefore, it is desirable to use coding parameters whose code amount is reduced to as small as possible, for an unnecessary block.

Therefore, for example, a method of avoiding performing block partitioning on an unnecessary block as much as possible, but encoding an unnecessary block in a skip mode of an inter encoding prediction (in a mode of not encoding vector information (there is a case in which prediction vector information is excluded) and the coefficients after quantization) is used.

In the case of using the above-mentioned method (2) as the method of determining the coding parameters of an external reference block, when the coding target block is a one which is not included in the indispensable encoded region, but is referred to by the external reference block, the external reference block encoder 43 needs to determine the coding parameters by using the above-mentioned method (2).

The select switch 45 refers to the target region to be transcoded information and the indispensable encoded region information which are outputted from the transcode controller 41, to check to see whether or not the coding target block is an unnecessary block, and, when the coding target block is included in the indispensable encoded region, checks to see whether or not the coding target block is an external reference block (steps ST46 and ST47).

When the coding target block is included in the indispensable encoded region, but is not an external reference block, the select switch 45 outputs the encoded data and the coding parameters which are outputted from the coding parameter extractor 42 to the variable length encoder 46 (step ST48).

When the coding target block is an external reference block, the select switch 45 outputs the encoded data and the coding parameters which are outputted from the external reference block encoder 43 to the variable length encoder 46 (step ST49).

Further, when the coding target block is an unnecessary block, the select switch 45 outputs the encoded data and the coding parameters which are outputted from the unnecessary block encoder 44 to the variable length encoder 46 (step ST50).

When receiving the encoded data and the coding parameters of the coding target block from the select switch 45, the variable length encoder 46 entropy-encodes the encoded data and the coding parameters to generate a partial region bitstream showing those encoded results (step ST51).

Because the coding target block is extracted as long as it is included in the target region to be transcoded, there is a case in which an adjacent coding target block existing in the original bitstream does not exist in the partial region bitstream. Therefore, it is necessary to redo the prediction process on the coding parameters by using information about an adjacent coding target block, such as a motion vector and a filter parameter. The process by the variable length encoder 46 including such the prediction process is performed by using the same method as that of the variable length encoder 23 of the video encoding device 1.

Further, because the partial region bitstream includes a wider range than the display area indicated by the display area information, the variable length encoder 46 acquires the header information of the partial region bitstream, the header information indicating which area the display area is from the transcode controller 41, multiplexes the header information into that partial region bitstream, and outputs the partial region bitstream after multiplexing of the header information (a partial region stream in conformity with a predetermined encoding codec) to the video decoding device 6.

The partial region bitstream generated by the variable length encoder 46 is configured in such a way as to be able to be decoded by the video decoding device 6.

The video decoding device 6 has the same functions as those of the entire region stream decoder 3. However, the video decoding device 6 can be configured in such a way as not to have the function, which the entire region stream decoder 3 has, of outputting the hint information, the coding parameters and the decoded image before loop filtering process to the outside thereof.

Further, the video decoding device 6 can be configured in such a way as to carry out the decoding by using a means different from that of the entire region stream decoder 3. In this case, the variable length encoder 46 of the partial region transcoder 4 performs variable length encoding on the encoded data and the coding parameters in such a way as to be compatible with the decoder (an encoding codec for partial region bitstream) of the video decoding device 6.

As can be seen from the above description, because the variable length encoder 23 of the video encoding device 1 in accordance with this Embodiment 1 is configured in such a way as to multiplex the hint information into the entire region bitstream, the hint information including the motion vector limitation information indicating the maximum range in which a search for a motion vector can be performed, the GOP size limitation information indicating the maximum of the GOP size which is the number of pictures belonging to a GOP, and the reference configuration specification information indicating a picture which is referred to at the time of decoding each picture belonging to the GOP, there is provided an advantage of being able to generate an entire region bitstream which is suitable for efficient generation of a partial region bitstream with a low operation amount without causing a reduction in the compression efficiency of the entire region bitstream.

More specifically, because the video encoding device 1 in accordance with this Embodiment 1 encodes the inputted image by imposing limitations on the maximum of motion vectors, the GOP size and the reference configuration of the inputted image in such a way that they meet the motion vector limitation information, the GOP size limitation information and the reference configuration specification information, respectively, the video encoding device can suppress the range in which information about a specified region of the decoded image of a certain frame propagates to a subsequent frame in inter-frame reference to a specific range, in the motion-compensated prediction process using inter-frame reference. Further, because the variable length encoder 23 multiplexes, as the hint information, the motion vector limitation information, the GOP size limitation information and the reference configuration specification information into the entire region bitstream, there is provided an advantage of being able to explicitly notify the range of propagation of decoded image information to the video transcoding device 2.

On the other hand, because the video transcoding device 2 is configured in such a way that when receiving the entire region bitstream outputted from the video encoding device 1, the entire region stream decoder 3 decodes the encoded data, the coding parameters, the hint information and the decoded image before loop filtering process of the entire region and outputs them to the partial region transcoder 4, the partial region transcoder 4 specifies the indispensable encoded region which is a region required in order to decode the display area information of each frame, and the target region to be transcoded meaning the image size of a partial region bitstream on the basis of the display area information and the hint information which are inputted thereto, assigns the coding parameters outputted from the entire region stream decoder 3, just as they are, to a coding target block which belongs to the inside of the indispensable encoded region and which does not have to refer to information of a region located outside the indispensable encoded region, regenerates encoded data and coding parameters for a coding target block which belongs to the inside of the indispensable encoded region and which needs to refer to information of a region located outside the indispensable encoded region, assigns a dummy coding parameter with a small code amount to a coding target block which is located outside the indispensable encoded region, but inside the target region to be transcoded, and multiplexes, as a partial region bitstream, the encoded data and the coding parameters, which are assigned in this way, of the coding target block in the target region to be transcoded, together with appropriate header information of the partial region bitstream, there is provided an advantage of being able to decode an image which is the same as or close to the decoded image of a partial region corresponding to the display area information, the decoded image being included in the decoded image of the entire region bitstream inputted to the video transcoding device 2, and also acquire a partial region bitstream having a smaller size than the entire region bitstream, with a low operation amount.

Embodiment 2.

In this Embodiment 2, an example in which a video encoding device and a video transcoding device as shown in above-mentioned Embodiment 1 are applied to a system different from that in accordance with above-mentioned Embodiment 1 will be explained.

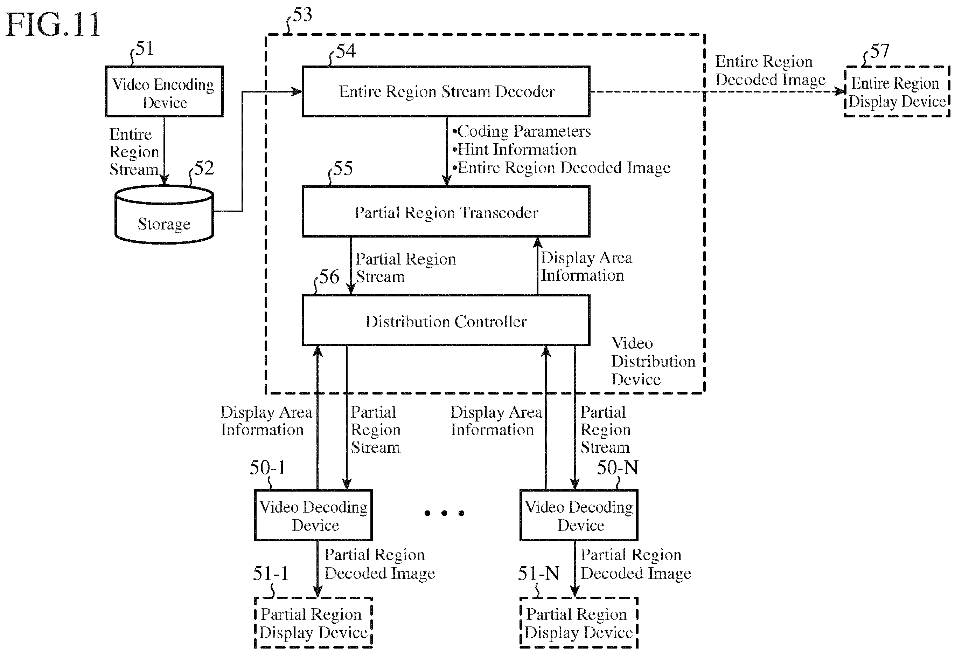

Fig. 11 is a block diagram showing a system to which a video encoding device and a video transcoding device in accordance with Embodiment 2 of the present invention are applied.

Referring to Fig. 11, the video encoding device 51 has the same functions as those of the video encoding device 1 shown in Fig. 1. The video encoding device 51 outputs an entire region stream generated thereby to either a video distribution device 53 or a storage 52.

The video distribution device 53 is configured with an entire region stream decoder 54, a partial region transcoder 55, and a distribution controller 56, and has a function of generating partial region streams on the basis of the entire region bitstream generated by the video encoding device 51 and pieces of display area specification information inputted thereto from video decoding devices 50-1 to 50-N, and outputting the partial region streams generated thereby to the video decoding devices 50-1 to 50-N.

The entire region stream decoder 54 has the same functions as those of the entire region stream decoder 3 shown in Fig. 1. The entire region stream decoder also has a function of outputting an entire region decoded image generated thereby to an entire region display device 57.

The partial region transcoder 55 has the same functions as those of the partial region transcoder 4 shown in Fig. 1.

The distribution controller 56 has a function of receiving the pieces of display area information outputted from the video decoding devices 50-1 to 50-N, and outputting the pieces of display area information to the partial region transcoder 55. The distribution controller also has a function of, when receiving a partial region bitstream outputted from the partial region transcoder 55, outputting that partial region bitstream to the video decoding device that has outputted the display area information used at the time of generating that partial region bitstream.

The entire region display device 57 is display equipment to display the entire region decoded image outputted from the entire region stream decoder 54.

Each of the video decoding devices 50-1 to 50-N outputs display area information to the video distribution device 53, and also decodes the image of a partial region from the partial region bitstream outputted from the video distribution device 53 on the basis of the display area information, to generate a partial region decoded image.

Each of the partial region display devices 51-1 to 51-N displays the partial region decoded image from the corresponding one of the video decoding devices 50-1 to 50-N.

As a concrete example of practical use, an example in which the video distribution device 53 is built in a surveillance camera recorder that stores a monitor video image having high definition will be explained.

In this case, the video encoding device 51 is an encoder device disposed in a surveillance camera that supplies monitor video image data to the camera recorder and can acquire a high definition video, and that generates an entire region bitstream which is an object to be distributed. An entire region bitstream generated by the video encoding device 51 which is an encoder device is stored in the storage 52 which is built in the camera recorder.

The camera recorder can decode the entire region bitstream stored in the storage 52 by using the entire region stream decoder 54, and can display an entire region decoded image generated thereby on the entire region display device 57 which is connected directly thereto.

The camera recorder can also distribute monitor video image data to the display terminals (tablet terminals, smart phones, PCs, and so on) of a plurality of users staying at distant places. Monitor video image data is distributed to the display terminals of users staying at distant places via a predetermined transmission system. However, there can be considered a case in which it is difficult to transmit all of the entire region bitstream, depending on the transmission capacity of the transmission system. In this system, when a user operates his or her display terminal to specify an arbitrary display area, and then makes a request for monitor video image data, display area information indicating the display area is inputted to the video distribution device 53 of the camera recorder via the predetermined transmission system, and the video distribution device 53 generates a partial region bitstream including the coding parameters required to play back the image of the display area specified by the user, and transmits the partial region bitstream to the display terminal which is the request source via the predetermined transmission system.

By thus specifying only a necessary region in the monitor video image, it becomes possible to suppress the amount of transmitted data, and for the user to watch and listen to the monitor video image at a distant place. Further, because the system makes it possible to specify a display area individually for each user, the system enables a user who, for example, can use a transmission line having a large transmission capacity to specify a larger display area.

The video decoding devices 50-1 to 50-N are built in the display terminals of the users, and receive partial region bitstreams transmitted from the video distribution device 53 and decode the partial region bitstreams into partial region decoded images, respectively, so that the partial region decoded images are displayed in the display terminals, respectively.

As mentioned above, by using the system shown in Fig. 11, each user is enabled to watch and listen to a high-definition monitor video image with a display device directly connected to the camera recorder, and is also enabled to watch and listen to a monitor video image by specifying only a necessary region even when he or she is staying at a distant place via a predetermined transmission system, while the amount of transmitted data is suppressed. Further, the system can also change a display area specified individually for each user.

Embodiment 3.

In this Embodiment 3, a video stream transmission system for employing the video encoding device and the video transcoding device which are shown in any of above-mentioned Embodiments 1 and 2 more efficiently will be explained.

In this Embodiment 3, a state in which an entire region image is partitioned into subpictures, such as slices or tiles, is assumed.

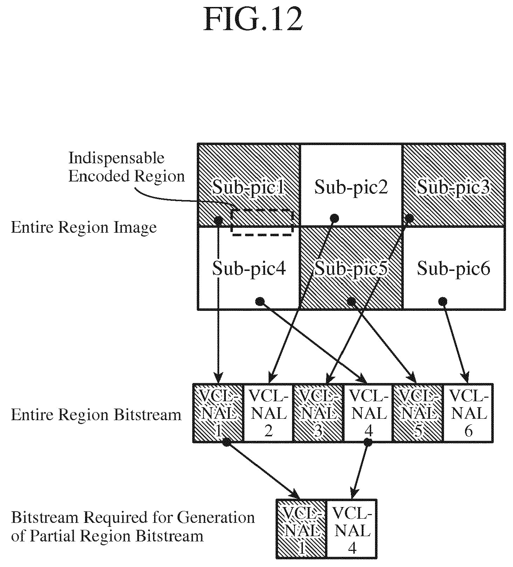

Fig. 12 is an explanatory drawing showing an example in which an entire region image is partitioned into six subpictures (Sub-pic).

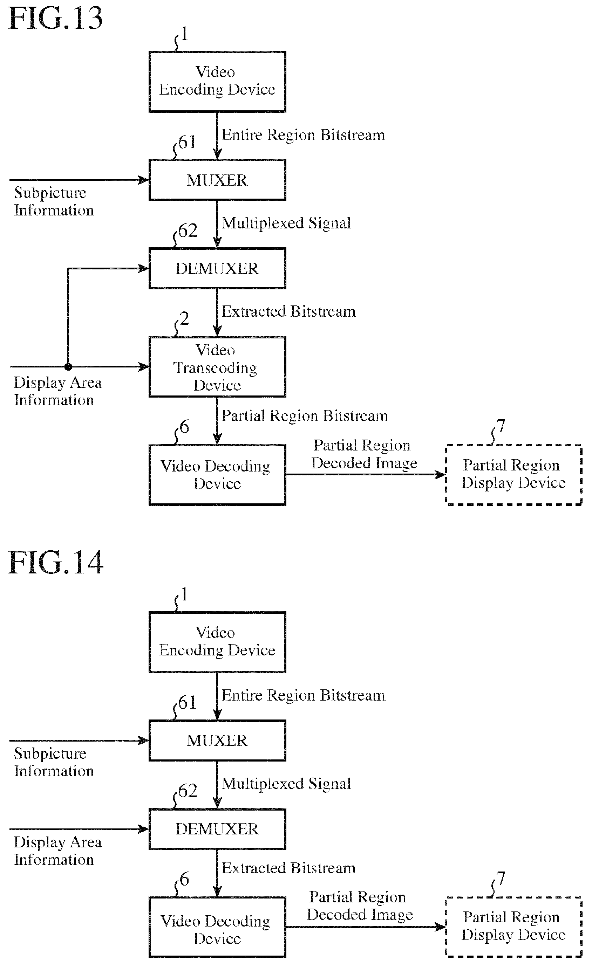

Fig. 13 is a block diagram showing the video stream transmission system in accordance with Embodiment 3 of the present invention. In Fig. 13, because the same reference numerals as those shown in Fig. 1 denote the same components or like components, the explanation of the components will be omitted hereafter.

A video encoding device 1 is the same as the video encoding device 1 shown in above-mentioned Embodiment 1 (or the video encoding device 51 shown in above-mentioned Embodiment 2). After generating a bitstream (a bitstream of each subpicture) into which hint information is multiplexed, the video encoding device combines the bitstreams of the subpictures for the entire region image, and outputs an entire region bitstream (an entire region stream) which is a bitstream of the entire region image.

In the example of Fig. 12, because the entire region image is partitioned into six subpictures, an entire region bitstream in which the bitstreams of the six subpictures are combined is outputted.

A MUXER 61 is a multiplexing transmission device to multiplex the entire region bitstream outputted from the video encoding device 1, and subpicture information indicating both the state of partitioning into the subpictures in the entire region image and the data position of the bitstream of each of the subpictures, the bitstream being included in the entire region bitstream, into a multiplexed signal in a transmission format set in advance, and to transmit the multiplexed signal.

A DEMUXER 62 is a demultiplexing device to receive the multiplexed signal transmitted by the MUXER 61 and demultiplex the multiplexed signal into the entire region bitstream and the subpicture information which are included in the multiplexed signal, and to refer to both the subpicture information and display area information indicating a subpicture which is a target to be decoded, to extract the bitstream of the subpicture which is a target to be decoded from the entire region bitstream.

Next, operations will be explained.

For example, when the entire region image is partitioned into six subpictures (Sub-pic), as shown in Fig. 12, an entire region bitstream into which the bitstreams of the six subpictures are combined is outputted from the video encoding device 1.

At that time, when the video decoding device 6 decodes only a partial region in the entire region image, the display area information indicating subpictures which are a target to be decoded is inputted to the DEMUXER 62 and the video transcoding device 2.

In the example of Fig. 12, a region (an indispensable encoded region) enclosed by a dotted line is a target region to be decoded, and the display area information indicates that the subpictures to which the region enclosed by the dotted line belongs are Sub-pic1 and Sub-pic4.

Although in a decoding device each subpicture needs to be a one that has been encoded on a per coding unit basis (e.g. , on a per HEVC basis or on a per NAL basis in H.264) which makes it possible to decode each subpicture independently, because it is assumed that the video decoding device 6 in accordance with this Embodiment 3 can carry out the decoding on a per NAL basis, the video decoding device 6 can decode the subpictures which are a target to be decoded even if the video transcoding device 2 generates a bitstream by using only NALs corresponding to Sub-pic1 and Sub-pic4.

The MUXER 61 receives an input of the subpicture information indicating both the state of partitioning into the subpictures in the entire region image and the data position of the bitstream of each of the subpictures, the bitstream being included in the entire region bitstream, from the outside thereof.

In the example of Fig. 12, the subpicture information indicates at which positions in the entire region image Sub-pic1 to Sub-pic6 respectively exist, and also indicates at which positions in the entire region bitstream the bitstreams corresponding to Sub-pic1 to Sub-pic6 respectively exist.

Although the example in which the subpicture information includes both the information indicating the partitioning state, and the data position information is shown above, the subpicture information can further include other information.

When receiving the entire region bitstream from the video encoding device 1, the MUXER 61 multiplexes the entire region bitstream and the subpicture information into a multiplexed signal in a transmission format set in advance, and transmits the multiplexed signal.

As the transmission format in this example, for example, a transmission format defined in MPEG-2 TS, MMT (MPRG Media Transport) or the like can be considered. The above-mentioned subpicture information is multiplexed, as a descriptor of one of these transmission systems, together with the entire region bitstream. However, because the above-mentioned transmission format is an example, another transmission format can be alternatively used.

When receiving the multiplexed signal transmitted by the MUXER 61, the DEMUXER 62 demultiplexes the multiplexed signal into the entire region bitstream and the subpicture information which are included in the multiplexed signal.

The DEMUXER 62 also specifies the subpictures which are a target to be decoded by referring to the display area information provided therefor from the outside thereof and indicating the subpictures which are a target to be decoded. In the example of Fig. 12, the DEMUXER specifies that Sub-pic1 and Sub-pic4 are the subpictures which are a target to be decoded.

After specifying the subpictures which are a target to be decoded, the DEMUXER 62 refers to the subpicture information separated from the multiplexed signal, to specify the bitstream of each of the subpictures which are a target to be decoded, the bitstream being included in the entire region bitstream, and extracts the bitstreams of the subpictures which are a target to be decoded from the entire region bitstream.

In the example of Fig. 12, the DEMUXER extracts the bitstreams (VCL-NAL1 and VCL-NAL4) corresponding to Sub-pic1 and Sub-pic4.

After the DEMUXER 62 extracts the bitstreams of the subpictures which are a target to be decoded, the video transcoding device 2 generates a partial region bitstream from those bitstreams and outputs the partial region bitstream to the video decoding device 6, like that in accordance with above-mentioned Embodiment 1.

As can be seen from the above description, because the video stream transmission system in accordance with this Embodiment 3 includes the MUXER 61 to multiplex the entire region bitstream outputted from the video encoding device 1, and the subpicture information indicating both the state of partitioning into the subpictures in the entire region image and the data position of the bitstream of each of the subpictures, the bitstream being included in the entire region bitstream, into a multiplexed signal in a transmission format set in advance, and to transmit the multiplexed signal, and the DEMUXER 62 to receive the multiplexed signal transmitted by the MUXER 61 and demultiplex the multiplexed signal into the entire region bitstream and the subpicture information which are included in the multiplexed signal, and to refer to both the subpicture information and the display area information indicating subpictures which are a target to be decoded, to extract the bitstreams of the subpictures which are a target to be decoded from the entire region bitstream, there is provided an advantage of making it sufficient to transmit only a bitstream included in the entire region bitstream generated by the video encoding device 1 and required for the decoding, thereby being able to reduce the transmission amount of the bitstream.

Although the example in which the DEMUXER 62 outputs the bitstream extracted from the entire region bitstream to the video transcoding device 2 is shown in this Embodiment 3, the video transcoding device 2 can be omitted and the bitstream extracted from the entire region bitstream can be outputted to the video decoding device 6, as shown in Fig. 14.

In this case, while the size of the bitstream inputted to the video decoding device 6 becomes large as compared with the configuration shown in Fig. 13, it becomes possible to decode the partial region at a high speed because the transcoding process by the video transcoding device 2 is not performed.

Embodiment 4.

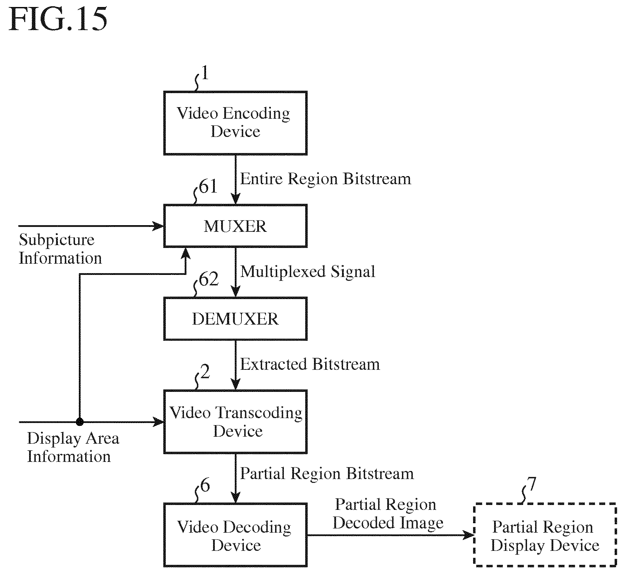

Although the example in which the DEMUXER 62 extracts the bitstreams of subpictures which are a target to be decoded from the entire region bitstream by referring to the subpicture information and the display area information is shown in above-mentioned Embodiment 3, the MUXER 61 can alternatively extract the bitstreams of subpictures which are a target to be decoded from the entire region bitstream by referring to the subpicture information and the display area information, as shown in Fig. 15.

In this case, the MUXER 61 multiplexes the bitstreams of subpictures which are a target to be decoded, the bitstreams being extracted from the entire region bitstream, into a multiplexed signal in a transmission format set in advance, and transmits that multiplexed signal to the DEMUXER 62.

The DEMUXER 62 receives the multiplexed signal transmitted by the MUXER 61, demultiplexes the multiplexed signal into the bitstreams of the subpictures which are a target to be decoded, the bitstreams being included in the multiplexed signal, and outputs those bitstreams to the video transcoding device 2 or the video decoding device 6.

This Embodiment 4 provides an advantage of being able to further reduce the transmission amount of the bitstream as compared with above-mentioned Embodiment 3.

The MUXER 61 can acquire the display area information from, for example, either the video decoding device 6 which is the decoding side or the video encoding device 1 which is the transmission side. As an alternative, the MUXER can acquire the display area information through a user's input.

While the invention has been described in its preferred embodiments, it is to be understood that an arbitrary combination of two or more of the above-mentioned embodiments can be made, various changes can be made in an arbitrary component in accordance with any one of the above-mentioned embodiments, and an arbitrary component in accordance with any one of the above-mentioned embodiments can be omitted within the scope of the invention.

INDUSTRIAL APPLICABILITY

The video encoding device in accordance with the present invention is suitable for devices or the likes that need to efficiently generate a partial region bitstream with a low operation amount without causing a reduction in the compression efficiency of the entire region bitstream.

EXPLANATIONS OF REFERENCE NUMERALS

1 video encoding device, 2 video transcoding device, 3 entire region stream decoder (indispensable encoded region determinator), 4 partial region transcoder (indispensable encoded region determinator, parameter extractor, partial region stream generator), 5 entire region display device, 6 video decoding device, 7 partial region display device, 11 encoding controller (prediction image generator), 12 block partitioner (prediction image generator), 13 select switch (prediction image generator), 14 intra predictor (prediction image generator), 15 motion compensation predictor (prediction image generator), 16 PCM encoder, 17 subtractor (bitstream generator), 18 transformation/quantization unit (bitstream generator), 19 inverse quantization/inverse transformation unit, 20 adder, 21 loop filter, 22 frame memory, 23 variable length encoder (bitstream generator), 31 variable length code decoder, 32 select switch, 33 intra predictor, 34 motion compensator, 35 PCM decoder, 36 inverse quantization/inverse transformation unit, 37 adder, 38 loop filter, 39 frame memory, 41 transcode controller, 42 coding parameter extractor, 43 external reference block encoder, 44 unnecessary block encoder, 45 select switch, 46 variable length encoder, 51 video encoding device, 52 storage, 53 video distribution device, 54 entire region stream decoder, 55 partial region transcoder, 56 distribution controller, 57 entire region display device, 50-1 to 50-N video decoding device, 51-1 to 51-N partial region display device, 61 MUXER (multiplexing transmission device), and 62 DEMUXER (demultiplexing device).

**Claims**

1. A video encoding device comprising:

    a prediction image generator to determine a coding parameter for a coding target block in a picture belonging to a GOP (Group Of Pictures), and to generate a prediction image by using said coding parameter; and
    a bitstream generator to compression-encode a difference image between said coding target block and the prediction image generated by said prediction image generator, and to multiplex encoded data which is a result of the encoding and said coding parameter to generate a bitstream, wherein
    said bitstream generator multiplexes hint information into said bitstream, said hint information including motion vector limitation information indicating a range in which a search for a motion vector can be performed, GOP size limitation information indicating a GOP size which is a number of pictures belonging to said GOP, and reference configuration specification information indicating a picture to be referred to at a time of decoding each picture belonging to said GOP.

2. The video encoding device according to claim 1, wherein when a coding mode for said coding target block is an inter coding mode, said prediction image generator searches for a motion vector in the range indicated by said motion vector limitation information and performs a prediction process on said coding target block by using said motion vector and said coding parameter, to generate the prediction image.

3. A video transcoding device comprising:

    an indispensable encoded region determinator to extract hint information from a bitstream generated by the video encoding device according to claim 1, and to refer to motion vector limitation information, GOP size limitation information and reference configuration specification information which are included in said hint information, to specify an indispensable encoded region which is a region required at a time of decoding a display area of a picture, the display area being indicated by display area information provided therefor from an outside thereof;
    a parameter extractor to extract encoded data and a coding parameter of a coding target block included in the indispensable encoded region specified by said indispensable encoded region determinator from the bitstream generated by said video encoding device; and
    a partial region stream generator to generate a partial region stream in conformity with an encoding codec set in advance from the encoded data and the coding parameter which are extracted by said parameter extractor.

4. The video transcoding device according to claim 3, wherein said parameter extractor includes: a coding parameter extractor to, when a coding target block included in the indispensable encoded region specified by said indispensable encoded region determinator is not an external reference block on which intra encoding is performed by referring to a value of a pixel located outside said indispensable encoded region, extract encoded data and a coding parameter of said coding target block from the bitstream generated by said video encoding device, and to output said encoded data and said coding parameter; an external reference block encoder to, when a coding target block included in the indispensable encoded region specified by said indispensable encoded region determinator is an external reference block on which the intra encoding is performed by referring to the value of a pixel located outside said indispensable encoded region, encode a decoded image of said coding target block by using an encoding method of not using a value of any pixel located outside said indispensable encoded region for prediction reference, and to output encoded data which is a result of the encoding, and a coding parameter used for the encoding of said decoded image; and a select switch to select either the encoded data and the coding parameter which are outputted from said coding parameter extractor or the encoded data and the coding parameter which are outputted from said external reference block encoder, and to output the encoded data and the coding parameter which are selected thereby to said partial region stream generator.

5. The video transcoding device according to claim 4, wherein said external reference block encoder generates an intra prediction image by using an intra encoding method of referring to a value of a pixel at a screen edge of said coding target block, compression-encodes a difference image between the decoded image of said coding target block and said intra prediction image, and outputs encoded data which is a result of the encoding, and a coding parameter used at a time of generating said intra prediction image.

6. The video transcoding device according to claim 4, wherein said external reference block encoder performs PCM (Pulse Code Modulation) encoding on the decoded image of said coding target block, and outputs encoded data which is a result of the encoding and a PCM coding parameter.

7. The video transcoding device according to claim 4, wherein said parameter extractor includes an unnecessary block encoder to, when indispensable encoded regions in pictures belonging to said GOP have different sizes, specify an indispensable encoded region which is a target region to be transcoded on a basis of said sizes from among the indispensable encoded regions of said pictures, to encode a coding target block, in each of the pictures, which is located outside said specified indispensable encoded region and inside said target region to be transcoded, in a skip mode in an inter encoding method, and to output encoded data which is a result of the encoding, and a coding parameter used for the encoding of said coding target block, and wherein said select switch selects either of the encoded data and the coding parameter which are outputted from said coding parameter extractor, the encoded data and the coding parameter which are outputted from said external reference block encoder, and the encoded data and the coding parameter which are outputted from said unnecessary block encoder, and outputs the encoded data and the coding parameter which are selected thereby to said partial region stream generator.

8. A video encoding method including the steps of:

a prediction image generator determining a coding parameter for a coding target block in a picture belonging to a GOP, and generating a prediction image by using said coding parameter; and
a bitstream generator compression-encoding a difference image between said coding target block and said prediction image, and multiplexing encoded data which is a result of the encoding, and said coding parameter to generate a bitstream, wherein
said bitstream generator multiplexes hint information into said bitstream, said hint information including motion vector limitation information indicating a range in which a search for a motion vector can be performed, GOP size limitation information indicating a GOP size which is a number of pictures belonging to said GOP, and reference configuration specification information indicating a picture to be referred to at a time of decoding each picture belonging to said GOP.

9. A video transcoding method comprising the steps of:

an indispensable encoded region determinator extracting hint information from a bitstream generated by the video encoding method according to claim 8, and referring to motion vector limitation information, GOP size limitation information and reference configuration specification information which are included in said hint information, to specify an indispensable encoded region which is a region required at a time of decoding a display area of a picture, the display area being indicated by display area information provided therefor from an outside thereof;

a parameter extractor extracting encoded data and a coding parameter of a coding target block included in said indispensable encoded region from the bitstream generated by said video encoding method; and

a partial region stream generator generating a partial region stream in conformity with an encoding codec set in advance from the encoded data and the coding parameter which are extracted by said parameter extractor.

10. The video encoding device according to claim 1, wherein when said coding target block is one of blocks into which an entire region image is partitioned on a per subpicture basis, said bitstream generator generates a bitstream of each of subpictures into which said hint information is multiplexed, and, after that, combines the bitstreams of said subpictures for the entire region image and outputs an entire region stream which is a bitstream of the entire region image.

11. A video stream transmission system comprising:

the video encoding device according to claim 10;
a multiplexing transmission device to multiplex an entire region stream outputted from said video encoding device and subpicture information indicating both a state of partitioning into subpictures in said entire region image, and a data position of a bitstream of each of the subpictures, the bitstream being included in said entire region stream, into a multiplexed signal in a transmission format set in advance, and to transmit said multiplexed signal; and
a demultiplexing device to receive the multiplexed signal transmitted by said multiplexing transmission device, to demultiplex said multiplexed signal into said entire region stream and said subpicture information which are included in said multiplexed signal, and to refer to said subpicture information and display area information indicating a subpicture which is a target to be decoded, to extract a bitstream of the subpicture which is the target to be decoded from said entire region stream.

12. A video stream transmission system comprising:

the video encoding device according to claim 10;
a multiplexing transmission device to refer to subpicture information indicating both a state of partitioning into subpictures in said entire region image, and a data position of a bitstream of each of the subpictures, the bitstream being included in said entire region stream, to extract a bitstream of a subpicture which is a target to be decoded from the entire region stream outputted from said video encoding device, to multiplex the bitstream of said subpicture which is a target to be decoded into a multiplexed signal in a transmission format set in advance, and to transmit said multiplexed signal; and
a demultiplexing device to receive the multiplexed signal transmitted by said multiplexing transmission device, and to demultiplex said multiplexed signal into the bitstream of said subpicture which is included in said multiplexed signal and which is a target to be decoded.

13. The video stream transmission systems according to claim 12, wherein said multiplexing transmission device acquires said display area information from a video decoding device to decode the bitstream of said subpicture which is a target to be decoded.

# FIG.1

FIG.2

EP 3 043 560 A1

# FIG.3

EP 3 043 560 A1

FIG.4

Display Area Information

Hint Information
- Motion Vector Limitation Information
- GOP Size Limitation Information
- Reference Configuration Specification Information
- Decoded Image (before Loop Filtering Process)

Encoded Data (Coefficients after Quantization, PCM Signal)

Coding Parameters
- Coding Mode
- Prediction Difference Coding Parameter
- Intra Prediction Parameter
- Inter Prediction Parameter
- Motion Vector
- PCM Coding Parameter
- Loop Filter Parameter

Transcode Controller — 41

Coding Parameter Extractor — 42

External Reference Block Encoder — 43

Unnecessary Block Encoder — 44

45

Variable Length Encoder — 46

Partial Region Transcoder — 4

Indispensable Encoded Region Information

- Indispensable Encoded Region Information
- Target Region to Be Transcoded Information

Header Information of Partial Region Bitstream

Encoded Data Coding Parameter

Encoded Data Coding Parameter

Partial Region Bitstream

FIG.5

START

Partitioning Into Blocks and Determination of Coding Mode — ST1

INTRA? — ST2
NO →
YES ↓

INTER? — ST3
NO →
YES ↓

to Next CU — ST12

Intra Prediction — ST4

Inter Prediction — ST5

PCM Encoding — ST6

Generation of Prediction Difference Signal — ST7

Transformation and Quantization — ST8

Inverse Quantization and Inverse Transformation — ST9

Decoding Adding Process — ST10

Are All CUs Processed? — ST11
NO
YES ↓

Loop Filtering Process — ST13

Variable Length Encoding — ST14

END

EP 3 043 560 A1

# FIG.6

```
                    ( START )
                        │
                        ▼
        ┌──────────────────────────────┐
        │ Variable Length Code Decoding │ ⌐ST21
        └──────────────────────────────┘
                        │
                        ▼
                   ⟨ INTRA? ⟩ ⌐ST22 ──NO──▶ ⟨ INTER? ⟩ ⌐ST23 ──NO──▶ ┌──────────────┐
                        │                        │                    │ PCM Decoding │ ⌐ST26
                       YES                      YES                   └──────────────┘
                        │                        │
         ST30           ▼                        ▼                                          ST27
  ┌───────────┐  ┌─────────────────┐   ┌─────────────────┐              ┌──────────────────────────┐
  │ to Next CU│  │ Intra Prediction │⌐ST24 │ Inter Prediction │⌐ST25  │ Inverse Quantization and │
  └───────────┘  └─────────────────┘   └─────────────────┘              │ Inverse Transformation   │
                        │                                               └──────────────────────────┘
                        ▼                                    ⌐ST28
                 ┌───────────────────────┐
                 │ Decoding Adding Process │◀───────────────────
                 └───────────────────────┘
                        │
                        ▼
               ⟨ Are All CUs Processed? ⟩ ⌐ST29
                  │              │
                 NO             YES
                                 │
                                 ▼
                 ┌───────────────────────┐
                 │ Loop Filtering Process │ ⌐ST31
                 └───────────────────────┘
                                 │
                                 ▼
                             ( END )
```

# FIG.7

```
                    ( START )
                        │
                        ▼
        ┌───────────────────────────────┐
        │  Specify Indispensable Encoded │
        │    Region and Target Region    │── ST41
        │        to Be Transcoded        │
        └───────────────────────────────┘
                        │
                        ▼
        ┌───────────────────────────────┐
        │ Extract Coding Parameters and So on of │
        │   Coding Target Block in Indispensable │── ST42
        │ Encoded Region from Entire Region Bitstream │
        └───────────────────────────────┘
                        │         ST43
                        ▼
        NO ◄──< External Reference Block? >
                        │ YES
                        ▼
        ┌───────────────────────────────┐
        │    Encode External Reference Block by │
        │ Using Encoding Method of Not Referring to │── ST44
        │    Value of Pixel Located Outside │
        │    Indispensable Encoded Region │
        └───────────────────────────────┘
                        │
                        ▼
        ┌───────────────────────────────┐
        │       Encode Coding Block      │── ST45
        │          in Skip Mode          │
        └───────────────────────────────┘
                        │    ST46              ST47
                        ▼
        YES ◄──< Unnecessary Block? >── NO ──< External Reference Block? >── NO
          │                                         │ YES
          ▼ ST50                    ▼ ST49          ▼ ST48
  ┌──────────────┐        ┌──────────────┐   ┌──────────────┐
  │Output Coding │        │Output Coding │   │Output Coding │
  │Parameters    │        │Parameters    │   │Parameters    │
  │and So on Which Are│   │and So on Which Are│ │and So on Which Are│
  │Outputted from│        │Outputted from External│ │Outputted from Coding│
  │Unnecessary   │        │Reference Block Encoder│ │Parameter Extractor│
  │Block Encoder │        └──────────────┘   └──────────────┘
  └──────────────┘
                        │
                        ▼
        ┌───────────────────────────────┐
        │       Generate Partial         │── ST51
        │      Region Bitstream          │
        └───────────────────────────────┘
                        │
                        ▼
                    ( END )
```

# FIG.8

0th Hierarchical Layer

$L^0$

$M^0$

1st Hierarchical Layer

$L^1 = L^0/2$

$M^1 = M^0/2$

2nd Hierarchical Layer

$L^2 = L^1/2$

$M^2 = M^1/2$

3rd Hierarchical Layer

$L^3 = L^2/2$

$M^3 = M^2/2$

to 4th Hierarchical Layer

EP 3 043 560 A1

# FIG.9

(a)

(b)

0th Hierarchical Layer

1st Hierarchical Layer

2nd Hierarchical Layer

3rd Hierarchical Layer

4th Hierarchical Layer

$L^0$

$M^0$

EP 3 043 560 A1

EP 3 043 560 A1

# FIG.10

Inter-Picture Reference

Reference
Configuration
Specification
Information

| I RAP | B non-RAP | B non-RAP | B non-RAP | P non-RAP | B non-RAP | B non-RAP | B non-RAP | P non-RAP | ··· | B non-RAP | I RAP | ··· |

GOP Size Limitation Information

※ RAP:Random Access Point Picture

※ non-RAP:Picture Which Is Not RAP

# FIG.11

EP 3 043 560 A1

# FIG.12

Indispensable
Encoded Region

Entire Region Image

| Sub-pic1 | Sub-pic2 | Sub-pic3 |
| Sub-pic4 | Sub-pic5 | Sub-pic6 |

Entire Region Bitstream

| VCL-NAL 1 | VCL-NAL 2 | VCL-NAL 3 | VCL-NAL 4 | VCL-NAL 5 | VCL-NAL 6 |

Bitstream Required for Generation
of Partial Region Bitstream

| VCL-NAL 1 | VCL-NAL 4 |

FIG.13

```
                          ⌇1
                 ┌──────────────────┐
                 │       Video       │
                 │ Encoding Device   │
                 └──────────────────┘
                          │ Entire Region Bitstream
           ⌇61            ▼
                 ┌──────────────────┐
Subpicture   ──────▶│      MUXER        │
Information      └──────────────────┘
                          │ Multiplexed Signal
           ⌇62            ▼
                 ┌──────────────────┐
           ──────▶│     DEMUXER       │
                 └──────────────────┘
                          │ Extracted Bitstream
            ⌇2            ▼
                 ┌──────────────────┐
           ──────▶│      Video        │
Display Area     │   Transcoding     │
Information      │     Device        │
                 └──────────────────┘
                          │ Partial Region Bitstream
           ⌇6            ▼
 ┌──────────────────┐  Partial Region       ⌇7
 │  Video Decoding   │  Decoded Image  ┌ ─ ─ ─ ─ ─ ─ ─ ┐
 │     Device        │ ──────────────▶   Partial Region
 └──────────────────┘                 │ Display Device │
                                      └ ─ ─ ─ ─ ─ ─ ─ ┘
```

FIG.14

```
                          ⌇1
                 ┌──────────────────┐
                 │       Video       │
                 │ Encoding Device   │
                 └──────────────────┘
                          │ Entire Region Bitstream
           ⌇61            ▼
                 ┌──────────────────┐
Subpicture   ──────▶│      MUXER        │
Information      └──────────────────┘
                          │ Multiplexed Signal
           ⌇62            ▼
                 ┌──────────────────┐
           ──────▶│     DEMUXER       │
Display Area     └──────────────────┘
Information               │ Extracted Bitstream
           ⌇6            ▼
 ┌──────────────────┐  Partial Region       ⌇7
 │  Video Decoding   │  Decoded Image  ┌ ─ ─ ─ ─ ─ ─ ─ ┐
 │     Device        │ ──────────────▶   Partial Region
 └──────────────────┘                 │ Display Device │
                                      └ ─ ─ ─ ─ ─ ─ ─ ┘
```

# FIG.15

Video Encoding Device (1)

↓ Entire Region Bitstream

MUXER (61)

Subpicture Information →

↓ Multiplexed Signal

DEMUXER (62)

↓ Extracted Bitstream

Video Transcoding Device (2)

Display Area Information →

↓ Partial Region Bitstream

Video Decoding Device (6)

→ Partial Region Decoded Image →

Partial Region Display Device (7)

## INTERNATIONAL SEARCH REPORT

| | International application No. |
|---|---|
| | PCT/JP2014/073532 |

### A. CLASSIFICATION OF SUBJECT MATTER
*H04N19/46(2014.01)i, H04N19/40(2014.01)i*

According to International Patent Classification (IPC) or to both national classification and IPC

### B. FIELDS SEARCHED

Minimum documentation searched (classification system followed by classification symbols)
H04N19/00-19/98

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-152749 A (Matsushita Electric Industrial Co., Ltd.), 24 May 2002 (24.05.2002), abstract; paragraphs [0005] to [0015]; fig. 1 (Family: none) | 1-2,8 |
| Y | JP 2003-527005 A (Sony Corp.), 09 September 2003 (09.09.2003), paragraphs [0030] to [0033]; fig. 2 to 4 & WO 2001/069936 A2    & US 2002/0157112 A1 & EP 1177691 A1      & CN 1372769 A & KR 10-2007-0063560 A | 1-2,8 |
| A | JP 2007-104231 A (Hitachi, Ltd.), 19 April 2007 (19.04.2007), paragraph [0021]; fig. 8 & US 2007/0076794 A1    & CN 1946182 A | 1-13 |

☒ Further documents are listed in the continuation of Box C.     ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18 November, 2014 (18.11.14) | 02 December, 2014 (02.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/073532 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-044622 A (Sony Corp.),<br>08 February 2002 (08.02.2002),<br>abstract; paragraph [0157]; fig. 4 to 7, 23<br>& EP 2369842 A1          & US 2002/0015444 A1<br>& CN 1321945 A          & KR 10-2001-0091988 A | 1-13 |
| A | JP 2005-341093 A (Mitsubishi Electric Corp.),<br>08 December 2005 (08.12.2005),<br>abstract; paragraphs [0009] to [0031]; fig. 1<br>to 6<br>(Family: none) | 1-13 |
| A | JP 11-225339 A (Matsushita Electric Industrial<br>Co., Ltd.),<br>17 August 1999 (17.08.1999),<br>abstract; paragraphs [0026] to [0042]; fig. 1<br>to 3<br>& US 2001/0001016 A1    & EP 912063 A2<br>& CN 1252675 A          & KR 10-2001-0070539 A | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012060459 A